# EUROPEAN PATENT SPECIFICATION

(11) **EP 4 455 845 B1**
(45) Date of publication and mention of the grant of the patent: **15.07.2026**
(21) Application number: 23170851.2
(22) Date of filing: 28.04.2023
(51) Int. Cl.: G06F 3/0354, G06F 3/046, G02F 1/167, G06F 3/04883, G02F 1/1333, G06F 3/04845, G06F 3/041

(54) **ELECTRONIC DISPLAY COMPRISING MAGNETOMETERS**
ELEKTRONISCHE ANZEIGE MIT MAGNETOMETERN
AFFICHAGE ÉLECTRONIQUE COMPRENANT DES MAGNÉTOMÈTRES

(43) Date of publication of application: 30.10.2024
(73) Proprietor: Advanced Magnetic Interaction, AMI, 38170 Seyssinet-Pariset (FR)
(72) Inventor: Hautson, Tristan, 38170 Seyssinet-Pariset (FR); Pellerano, Vincent Thomas, 38170 Seyssinet-Pariset (FR); Jobert, Timothée, 38170 Seyssinet-Pariset (FR); Chavin-Collin, Gireg, 38170 Seyssinet-Pariset (FR)
(74) Representative: Peterreins Schley

(56) References cited:
- US-A1- 2013 009 907
- US-A1- 2020 201 454
- US-A1- 2021 041 967

## Description

### TECHNICAL FIELD

The present disclosure concerns an electronic interactive display, and an associated user borne device, computer implemented method, system, and computer program element.

### BACKGROUND

Electronic interactive displays enable a user to write or draw on a visible surface using a user borne device such as a stylus. Typically, a representation of what the user has written or drawn remains persists on the visible surface of the electronic interactive display when the user withdraws the user borne device from the visible surface. Furthermore, processing circuitry within the electronic interactive display may capture and save representation of the writing or drawing that the user has applied to the electronic interactive display.

An example of an electronic interactive display is, for example, an electronic interactive display such as a tablet, a smartphone, or a monitor. In a drawing mode of the electronic interactive display, a user may load a drawing application hosted by the electronic tablet. The electronic tablet detects the location of touch of a user's finger or stylus using a mutual capacitance arrangement embedded in the screen of the electronic tablet. The electronic interactive display digitises the location of touch of the user's finger or stylus, and provides the digitised location to the drawing application via a device driver.

The drawing application updates an internal file of the digitised location. The drawing application displays the digitised location, or a trace of the digitised location, via the screen of the electronic interactive display, typically registered to the same location on the electronic interactive display screen that the user originally touched using their finger or stylus. In this way, a user can interact with the electronic interactive display. More generally, a user may interact with an application menu system using a stylus or their finger, for example.

However, a significant latency is often experienced by user between the event of user's finger or stylus touching the screen of the electronic interactive display, and the subsequent event of displaying of the drawn artefact on the screen of the electronic interactive display. This latency is subjectively perceivable by the user. Such latency is introduced, for example, by the capacitive sensing of the screen of the electronic interactive display, interface electronics, device driver software and/or the drawing application itself, and/or by the thin film transistor (TFT) screen of the electronic tablet, and by screen refresh.

Accordingly, electronic interactive displays can be further improved.

Document US 2013/009907 A1 discloses a stylus comprising a magnetic field source which, when combined with a touch sensor, provides for several input modes for an electronic device. Magnetometers in the electronic device may detect the presence, location, orientation, and angle of the magnet and thus the stylus. Document US 2020/201454 A1 discloses a magneto-electrophoretic medium that can be globally and locally addressed and erased. The medium provides a writeable display and the ability to write and erase with only minimal power requirements. Document US 2021/041967 A1 discloses a stylus for interacting with a magnetic writing medium, such as a magneto-electrophoretic media containing magnetic particles that can be switched electrically in the same way as a conventional electrophoretic display.

### SUMMARY

The present disclosure relates to an electronic interactive display as defined in claim 1, to a computer implemented method for operating the electronic interactive display as defined in claim 11, to the use of a user borne device with an electronic interactive display as defined in claim 12, to a system as defined in claim 13, and to a computer program element as defined in claim 15. The dependent claims depict preferred embodiments of the electronic interactive display and the system. According to a first aspect, there is provided an electronic interactive display. The electronic interactive display comprises a substrate, a power source, an interactive display layer comprised on the substrate, and a plurality of magnetometers defining a reference coordinate system of the electronic interactive display. Each magnetometer of the plurality of magnetometers has a rigid spatial relationship to the other magnetometers. The electronic interactive display further comprises processing circuitry communicably coupled to at least the interactive display layer and the plurality of magnetometers.

The interactive display layer comprises a magnetically actuatable material.

The interactive display layer faces a user of the electronic interactive display in use. A portion of the interactive display layer is configurable from least a first visual state into a second visual state based on a magnetic stimulus.

The plurality of magnetometers is configured to perform magnetic field measurements of a user borne device comprising at least one magnet within a sensing volume proximate to the interactive display layer, and to provide magnetic field measurement data based on the magnetic field measurements to the processing circuitry.

The processing circuitry is configured to receive the magnetic field measurement data, and to determine the position and/or orientation, relative to the interactive display layer, of the user borne device when the at least one user borne device is present in the sensing volume.

The processing circuitry is configured to detect, using the magnetic field measurement data, that the user borne device has been reoriented in the sensing volume in the reference coordinate system. The processing circuitry is configured to change from a first operating mode to a second operating mode, or vice versa, when the processing circuitry has detected that the user borne device has been reoriented in the sensing volume.

Effects of the foregoing aspect include those of digitising writing or images applied to the interactive display layer of the electronic interactive display by a user borne device comprising at least one magnet. For example, when the electronic interactive display comprises a magnetically actuatable material, a magnet comprised in the user borne device can switch a portion of the interactive display layer between a first visual state and a second visual state based on exposure to a magnetic field provided by the magnet comprised in the user borne device. The magnetic characteristics of the user borne device can simultaneously be tracked by the plurality of magnetometers, enabling the location (position and/or orientation) to be determined as a user of the electronic interactive display writes on the interactive display layer of the electronic interactive display using the at least one magnet of the user borne device.

The latency between the user observing the visual response of the interactive display layer (switching the magnetically actuatable material between a first visual state into a second visual state based on a magnetic stimulus, or vice versa) and the determination, by the processing circuitry, of the position and/or orientation of the user borne device (obtained via measurements of the magnetic field of the user borne device by the plurality of odometers) is significantly reduced, as compared to an implementation reliant on detecting the location of a user borne device using for example, capacitive or force sense resistor methods. This is because detecting the location of user borne device using capacitive or force sense resistor methods requires interface circuitry and associated processor register addressing, which introduces latency.

In previously known electronic tablets discussed in the background, visual feedback can be provided to a user by an electronically driven electronic pixel display (EPD). Maintaining and/or changing the state of an EPD display (such as, for example, a TFT or LCD screen) results in relatively high power consumption. According to the first aspect, the interactive display layer comprises a magnetically actuatable material that changes from a first visual state into a second visual state based on the application of an external incident magnetic field from a user borne device comprising a magnet, for example. Therefore, the user can sketch or write on the electronic interactive display using much lower power consumption, as compared to the previously known electronic tablets, because an EPD is not needed to maintain the sketched or written input on the magnetically actuatable material of the electronic interactive display.

In an example, if the user does not desire to determine the location of the user borne device, the plurality of magnetometers can be powered down and the electronic interactive display may have a display only mode without recording of the location of user borne device using a plurality of magnetometers.

According to a second aspect, there is provided a use of a user borne device with an electronic interactive display according to the first aspect. The user borne device comprises an elongate body defining a longitudinal axis of the user borne device. The elongate body comprises a proximal end and a distal end, a first magnet disposed at, or near to, the proximal end of the elongate body, and a second magnet disposed along at least a portion of the longitudinal axis of the user borne device in-between the first magnet and the distal end of the elongate body. The second magnet has a magnetic moment that is at least twice as great as the magnetic moment of the first magnet.

An effect is that a user borne device suitable for writing or sketching on an interactive display layer of an electronic interactive display according to the first aspect does not require electronic components. In other words, the magnetically actuatable material of the interactive display layer of the electronic interactive display according to the first aspect can be written to using a user borne device comprising a magnet even when the electronic interactive display is not powered on, in one example, and without the user borne device requiring any form of electronics. The cost and construction complexity of the user borne device is simplified. In an example, one magnet is used for magnetic tracking and writing on the magnetically actuatable material. In an example, a first magnet is used for writing, and a second magnet is used for magnetic tracking. In an example, different user borne devices may be provided with magnets having a different spatial distribution, enabling an electronic interactive display to identify that a different type of User borne device is being used.

According to a third aspect, there is provided a computer implemented method for operating the electronic interactive display according to the first aspect, comprising:
- performing magnetic field measurements of a user borne device within a sensing volume proximate to an interactive display layer of the electronic interactive display using a plurality of magnetometers defining a reference coordinate system of the electronic interactive display, wherein each magnetometer of the plurality of magnetometers has a rigid spatial relationship to the electronic interactive display;
- providing the magnetic field measurement data to processing circuitry based on the magnetic field measurements; and
- determining the position and/or orientation relative to the interactive display layer, of the user borne device when the at least one user borne device is present in the sensing volume.

According to a fourth aspect, there is provided a system. The system comprises an electronic interactive display as defined the first aspect, or its embodiments, a user borne device according to the second aspect, or its embodiments, a host, and a communications network configured to communicably couple the communications interface of the electronic interactive display to the host. The electronic interactive display is configured to communicate screen representation data written to the electronic interactive display by the user borne device to the host.

According to a fifth aspect, there is provided a computer program element comprising machine readable instructions which, when performed by processing circuitry, are configured to perform the computer implemented method according to the third aspect.

According to a sixth aspect, there is provided a kit of parts comprising an electronic interactive display according to the first aspect, and a user borne device according to the second aspect.

### BRIEF DESCRIPTION OF THE DRAWINGS

Other characteristics will be apparent from the accompanying drawings, which form a part of this disclosure. The drawings are intended to further explain the present disclosure and to enable a person skilled in the art to practice it. However, the drawings are intended as nonlimiting examples. Common reference numerals on different figures indicate like or similar features.
- Fig. 1A: schematically illustrates a magnetically actuatable display material.
- Fig. 1B: schematically illustrates a magnetically and electrically actuatable display material.
- Fig. 1C: schematically illustrates a magnetically and electrically actuatable display material comprising a position digitization means.
- Fig. 2: schematically illustrates a side cut through view of an electronic interactive display.
- Fig. 3: schematically illustrates a plurality of magnetometers comprised in an electronic interactive display.
- Fig. 4: schematically illustrates electronic functional modules of an electronic interactive display.
- Fig. 5: schematically illustrates placement locations for a plurality of magnetometers relative to the substrate of an electronic interactive display.
- Fig. 6: schematically illustrates placement locations for a plurality of magnetometers relative to the substrate of an electronic interactive display.
- Fig. 7: Schematically illustrates variants of magnetometer array arrangements.
- Fig. 8A: schematically illustrates altering an image between visual states.
- Fig. 8B: schematically illustrates a computer implemented method for altering an image between visual states.
- Fig. 9A: schematically illustrates a first stage of an electric display priming function.
- Fig. 9B: schematically illustrates a second stage of an electric display priming function.
- Fig. 9C: schematically illustrates a third stage of an electric display priming function.
- Fig. 9D: schematically illustrates a computer implemented method for electric display priming.
- Fig. 10A: schematically illustrates changing a mode by reorienting a user borne device.
- Fig. 10B: schematically illustrates a computer implemented method for changing a mode by reorienting a user borne device.
- Fig. 11A: schematically illustrates applying a trace variation function based on user borne device orientation.
- Fig. 11B: schematically illustrates a computer implemented method for trace variation based on user borne device orientation.
- Fig. 12: schematically illustrates a side cut through view of an exemplary user borne device.
- Fig. 13: schematically illustrates a computer implemented method for operating an electronic interactive display.
- Fig. 14: schematically illustrates a system comprising an electronic interactive display.

### DETAILED DESCRIPTION

This description concerns an electronic interactive display 10 comprising at least a plurality of magnetometers M and an interactive display layer 20B that is visible to the user, in use, and can maintain its state until a subsequent magnetic and/or electric addressing event occurs. The interactive display layer 20B comprises a magnetically actuatable material. A magnetically actuatable material is one that changes colour, contrast, reflectance, and the like between a first visual state and second visual state when the magnetically actuatable material is exposed to a more concentrated magnetic flux than the background flux (for example, of the Earth's magnetic field). In combination with a user borne device comprising an appropriate magnet or magnets 52, 54, the electronic interactive display 10 can display writing on the magnetically actuatable material but has been directly written by a magnet 52, and the plurality of magnetometers M can track the location (position and/or orientation) of the user borne device, and in particular a track of (x,y,z) traced by the proximal end P of the user borne device 50 on the surface of the electronic interactive display 10 based on at least the change in the magnetic field F52 observed by the plurality of magnetometers M.

Therefore this specification proposes a solution to the problems of high latency and high power consumption in other electronic interactive displays. In particular, the use of elecromagnetophoretic materials enables low latency rendering, because the display is directly magnetically addressed (switched) by an incident magnetic field, and thus higher latency electronic addressing is not required to change the appearance of a magnetically addressed portion of the screen Magnetic tracking using a plurality of magnetometers M enables digitisation of the position and/or orientation of the user borne device 50. It enables the capture of motion on the screen of handwriting, drawing, and/or touching.

In some examples, the magnetic polarity of the magnet 52, 54, 56 relative to the electronic interactive display 10 can be detected. For example, when a first magnet comprised in a user borne device 50 is initially closer to the electronic interactive display 10 compared to a second magnet, a mode change can be selected when the plurality of magnetometers M determined that longitudinal axis L of the user borne device 50 has been, for example, flipped around in space by user so that a second magnet having a different polarity to a first magnet is closer to the electronic interactive display 10 compared to the first magnet. The mode change can be a change from a writing mode to an erasing mode of the electronic interactive display 10, for example. The mode change can be detected by detecting the polarity of a magnet located at a distal end of a user borne device 50, for example.

In some examples, additional drive electrodes to change the appearance of the interactive display layer 20B, and in particular the magnetically actuatable material, from either of the first or second visual state into at least third or fourth visual states. Typically, this change into the at least third or fourth visual state is accomplished by exposing the magnetically actuatable material to a further electric field from the additional drive electrodes.

In an example, the opacity or contrast of the rendering on the magnetically actuatable material may depend on the strength of a magnet 54 at a proximal end P of the user borne device 50, and/or on the orientation of the user borne device 50 relative to the electronic interactive display 10. Accordingly, as the rendering opacity depends on the magnet strength and proximity, a model of rendering for the electronic interactive display can be generated that is precisely adapted to a particular user borne device 50. In an example, the plurality of magnetometers M may detect a particular user borne device 50 based on variations in the spacing or distribution or type of magnets along a longitudinal axis of the user borne device 50.

For example, the user borne device 50 may comprise one single long and thin magnet 54 located at the proximal end of the user borne device 50 and extending along a longitudinal axis L of the user borne device towards its distal end. Alternatively, the user borne device 50 may comprise two stationary magnets. A first magnet 54 is provided at the proximal end (tip) of the user borne device 50. In embodiments, the first magnet 54 has a smaller magnetic strength compared to a second magnet 52 used by the plurality of magnetometers M for tracking the position of the user borne device 50.

The application of magnetic tracking in this way enables different user borne device types (a pen, a brush, stylus) to be compatible with the screen magnetic sensitive display.

According to the embodiments summarised above and to be discussed in detail below, the user is enabled to draw and to digitally capture their writing strokes on a magnetically actuatable display bi-stable electrophoretic display (bi-stable EPD) that is magnetically and electrically actuated, in some embodiments known as an electromagnetophoretic display. An electrically and/or electronically passive writing instrument (user borne device 50) comprising at least one magnet does not require electronic components to write on the electromagnetophoretic display of the electronic interactive display 10. The movement of the user borne device 50 relative to the electronic interactive displays digitized by a plurality of magnetometers M.

Within the user borne device 50, a first magnet 54 is located at the proximal end. In examples, a further magnet 56 is provided at the distal end of the user borne device 50. The further magnet 56 can, in examples, have a different polarity, or magnetic moment vector and/or a greater magnetic moment compared to the first magnet 54. In examples, the user can selectively raise part of the screen by flipping the user borne device 50 in its longitudinal axis L such that the distal end D of the user borne device 50 comprising the further magnet 56 becomes close to the surface of the electronic interactive device 10. This change is detected by the plurality of magnetometers M, which changes the electronic device 10 into an erasing state and detects the location of the erasing strokes as the further magnet 56 is moved around the screen of the electronic interactive device 10 by the user.

In general, a user borne device 50 can be provided with a first magnet 54 located close to, or at the proximal end of the user borne device 50. A user borne device 50 can be provided with a first magnet 54 located close to, or at the proximal end P, and a second magnet 52 on or around the longitudinal axis L of the user borne device 50 in between the proximal end P under distal end D of the user borne device 50. In an embodiment, the second magnet 52 is closer to the proximal end P relative to the distal end D of the user borne device 50. In an embodiment, the magnetic field of the second magnet 52 is at least twice as strong relative to the first magnet 54. In an embodiment, the user borne device 50 may comprise a first magnet 54 located at, or close to, the proximal end P, and a further magnet 56 located at, or close to, the distal end D user borne device 50, wherein the further magnet 56 has a different, and/or opposite polarity compared to the first magnet 54.

According to an embodiment, the user borne device 50 may comprise a first magnet 54 located at, or close to, the proximal end P, a further magnet 56 located at, or close to, the distal end D having a different or opposite polarity from the first magnet 54, and a second magnet 52 located on, or around, the longitudinal axis L of the usable device 50. The second magnet 52 may generate a stronger magnetic field compared to the first magnet 54 and the further magnet 56.

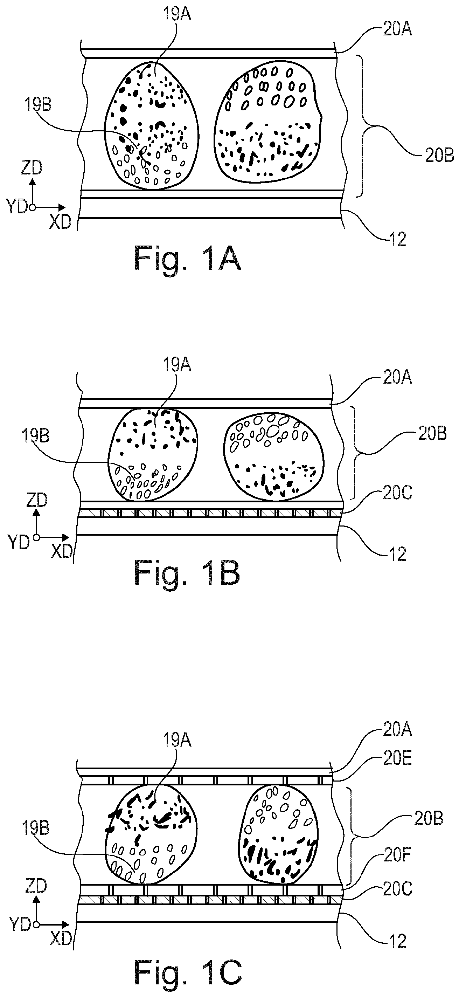

Fig. 1A schematically illustrates a side cut through view of an interactive display .

A substrate 12 supports an interactive display layer 20B encapsulated by a lamination comprising a first electrode array 20A. In an embodiment, a second electrode array 20C may be provided, attached to the substrate 12 by a lamination layer (not shown). The interactive display layer 20B comprises a magnetically actuatable material 19A, 19B. In embodiments, the magnetically actuatable material 19A, 19B may also be actuated by an electronic field emitted from the first 20A and/or second 20B electrode arrays. In embodiments, the first 20A and/or second 20B electrode arrays are disposed on the substrate 12 in an individually addressable pixel pattern. In this case, the first 20A and/or second 20B electrode arrays form respective first and second pixel arrays (not shown). However, the first 20A and/or second 20B electrode arrays can be arbitrarily shaped regions, or the entire region, of the interactive display layer 20.

The first electrode array 20A comprises, for example, a transparent conductor such as Indium Tin Oxide (ITO).

In embodiments, the magnetically actuatable material 19A, 19B comprised in the interactive display array 20B comprises microcapsules (enclosing both magnetically actuatable materials 19A, 19B). Each microcapsule may comprise two types of electromagnetophoretic pigmentation, and a solvent, and in examples, a polymeric binder. The microcapsules may be freely encapsulated in the interactive display array 20B, or confined by micro-cells in, for example, a honeycomb or square pattern (not shown). The electromagnetophoretic pigmentation can be displaced within the microcapsule by a magnetic field and/or an electric field. In the illustrated embodiment, the first electromagnetophoretic pigment 19A has a darker, more saturated contrast level than the second electromagnetophoretic pigment 19B.

In embodiments, when the first electromagnetophoretic pigment 19A dominates towards the front of the electronic interactive display (in other words, when a predominant amount of first electromagnetophoretic pigment 19A in each microcapsule is closer to the first electrode array 20A than the second electromagnetophoretic pigment 19B, that portion of the electronic interactive display 10 will be in a first visual state. In an example, the first visual state may be a dark grey or a black colour.

In embodiments, when the second electromagnetophoretic pigment 19B dominates towards the front of the electronic interactive display (in other words, when a predominant amount of second electromagnetophoretic pigment 19B in each microcapsule is closer to the first electrode array 20A than the first electromagnetophoretic pigment 19B, that portion of the electronic interactive display 10 will be in a second visual state. In an example, the second visual state may be a light grey or white colour, for example. Fig. 1A illustrates the microcapsule on the left-hand side in the first visual state, and the microcapsule on the right hand side in the second visual state.

To change the portion of the electronic interactive display from first visual state to the second visual state is typically performed by a magnetic stimulus, for example from a magnet 54 of a user borne device 50.

Fig. 1B schematically illustrates a magnetically and electrically actuatable display.

The second electrode array 20C may comprise, for example, an active thin film transistor matrix. The second electrode array 20C may be divided into a large number of pixels distributed on the surface of the electronic interactive display. For example, pixels comprised in the second electrode array 20C may be formed by an array of thin film transistors that allow the pixel electrodes of the second electrode array 20C to be addressed using a row-column addressing scheme, in one example. In another example, the second electrode array 20C may be unitarily addressed to enable each portion of the entire screen of the electronic interactive display 10 to be biased by the same amount. In another example, selected portions of the second electrode array can be provided such that, for example, a portion of the screen of the electronic interactive device intended to display a menu feature can be biased separately to the rest of the screen.

In an example, for a given spatial position (x,y) on the screen of the electronic interactive display 10, a pixel or region of the first electrode array 20A may apply a positive and/or negative electric field bias to a corresponding microcapsule or microcapsules of the underlying spatial position (x,y) of the interactive display array 20B, with the corresponding pixel or region of the second electrode array 20B held at 0 Volts, as an example. This may cause the first electromagnetophoretic pigment 19A in each microcapsule to be attracted to be closer to the first electrode array 20A than the second electromagnetophoretic pigment 19B. In this case, that portion of the electronic interactive display 10 will be in a third visual state.

In an example, for a given spatial position (x,y) on the screen of the electronic interactive display 10, a pixel or region of the first electrode array 20A may apply a different positive and/or negative electric field bias to a corresponding microcapsule or microcapsules of the underlying spatial position (x,y) of the interactive display array 20B, with the corresponding pixel or region of the second electrode array 20B held at a different voltage level. This may cause the first electromagnetophoretic pigment 19A in each microcapsule to be repelled to be closer to the second electrode array 20B than the second electromagnetophoretic pigment 19B. In this case, that portion of the electronic interactive display 10 will be in a fourth visual state.

In an example, the third visual state may be a saturated black colour, for example. In an example, the fourth visual state may be a saturated white colour, for example. In general, a magnetic stimulus typically moves the electromagnetophoretic pigments 19A, 19B with relatively lower efficiency as compared to an electric stimulus. Hence, a full range of pigment saturation (between third and fourth visual states) is obtained with the combination of magnetic and electric stimulation of the electromagnetophoretic pigments 19A, 19B. However, an acceptable range of pigment saturation (between first and second visual states) is obtained with the use of magnetic stimulation of the electromagnetophoretic pigments 19A, 19B.

The conference paper "Magnetically Written Electrophoretic Display" by Tsai, CC and McCreary, MD, in the proceedings of IDW 2019, ISSN-L 1883-2490/26/1391 further discusses the magnetic actuation of electrophoretic pigments.

Fig. 1C schematically illustrates a magnetically and electrically actuatable display material comprising a touch position digitization means.

In an example, the touch position digitisation means may comprise one, or both, of a capacitive touch sensing layer 20E or a force sensing resistor layer 20F. If provided, a capacitive touch sensing layer 20E may work according to a mutual capacitance principle, and/or a self-capacitance principle. The capacitive touch sensing 20E can, in examples, be disposed in pixels that correspond, or are spatially registered, to the first and second electrode arrays 20A, 20B.

The touch position digitisation means enables the localisation in the (X,Y) plane of the touch of a proximal or distal end of a user borne device 50, or finger of a user, in some examples discussed in this specification. Such touch information can be combined with location information of the user borne device 50 obtained using the plurality of magnetometers M, for example, to improve overall accuracy and/or to localize in time the instant that the user borne device 50 touches the interactive display layer 20B, or an overlying electrode 20A or 20E, of the electronic interactive display.

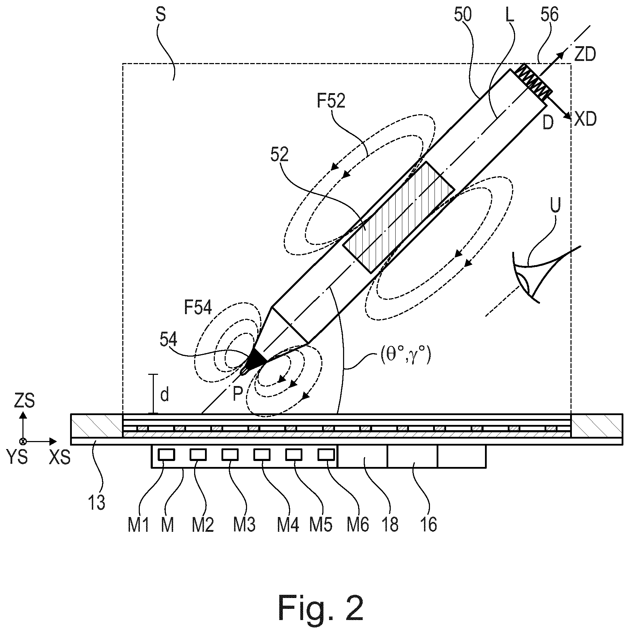

Fig. 2 schematically illustrates a side cut through view of an electronic interactive display.

According to the first aspect, there is provided an electronic interactive display 10 comprising a substrate 12, a power source 14, an interactive display layer 20B comprised on the substrate 12, a plurality of magnetometers M defining a reference coordinate system of the electronic interactive display. Each magnetometer M1 - M6 of the plurality of magnetometers M has a rigid spatial relationship to the other magnetometers M. The electronic interactive display 10 further comprises processing circuitry 16 communicably coupled to at least the interactive display layer 20B and the plurality of magnetometers M.

The interactive display layer 20B comprises a magnetically actuatable material 19A, 19B.

The interactive display layer 20B faces a user U of the electronic interactive display 10, in use. At least a portion of the interactive display layer 20B is configurable from least a first visual state into a second visual state based on a magnetic stimulus.

The plurality of magnetometers M is configured to perform magnetic field measurements of a user borne device 50 comprising at least one magnet within a sensing volume S proximate to the interactive display layer 20B, and to provide magnetic field measurement data based on the magnetic field measurements to the processing circuitry 16.

The processing circuitry 16 is configured to receive the magnetic field measurement data, and to determine the position and/or orientation, relative to the interactive display layer 20B, of the user borne device 50 when the at least one user borne device 50 is present in the sensing volume S.

An example electronic interactive display as shown in Fig. 2, comprises a back panel 13 and a frame 11A, 11B. The back panel is, for example, a rigid mechanical support structure made of a solid material for example plastic or metal.

A substrate 12 is mounted on the back panel 13. The substrate 12 supports an interactive display layer 20B. In the example of Fig. 2, a second electrode array 20C is attached to the substrate 12, with the interactive display layer 20B attached to the second electrode array 20A, but in other examples the interactive display layer 20B can be attached to the substrate 12 directly. According to an example, the interactive display layer 20B

In examples, the frame 11A, 11B can comprise a clear, opaque, or translucent material and laterally encloses (in the illustrated XS, YS plane) an active area in which content may be displayed by the interactive display layer 20B. The active area may also define an interaction surface of electronic interactive display 10 with a proximal end P of a user borne device 50. The interactive display layer 20B may comprise, for example, a low-power, reflective display that, through reflection, harnesses ambient light to present content. In an example, the interactive display layer 20B is not an active emitter of light. In an example, the interactive display 20B is not an OLED, LCD, or TFT display.

According to an embodiment, the interactive display layer 20B provides a monochromatic display scale, for example black and white or greyscale shading, as the interactive display layer 20B is actuated between first to fourth visual states defined herein.

In the example of Fig. 2, the interactive display layer 20B has a lamination or deposited layer forming a first electrode array 20A. For example, the first electrode array 20A is an optically transparent layer of Indium Tin Oxide (ITO) with an electrode array patterned thereon. In other examples, the first electrode array 20A can be omitted and/or replaced with a clear acrylic protective layer, for example. According to other examples, the example electronic interactive display 10 can comprise the arrangements illustrated in Fig. 1A, Fig. 1B, or Fig 1C.

According to embodiments, the interactive display layer 20B can be sub-divided into pixels based on a layout of the electrodes of the first electrode array 20A and/or the second electrode array 20B. In an embodiment, the interactive display layer 20B is divided into a plurality of square pixels with a row column addressing scheme. In an embodiment, the interactive display layer 20B can be divided by the first electrode array 20A and/or the second electrode array 20B into arbitrarily shaped regions having different display characteristics. For example, a spatial portion of the interactive display layer 20B may have a rectangular bar reserved for use as a "menu", and this region may have a lighter or darker visual display state. Therefore, the arrangement of the first electrode array 20A and/or the second electrode array 20B can accommodate such arbitrary regional shapes or subdivisions of the interactive display layer 20B.

The portion of the electronic interactive display 10 that is visible to a user U, in use, may be referred to an upper, or front portion. The portion of the electronic interactive display 10 that is not visible to a user, U, in use may be referred to as a lower, or rear portion.

The interactive display layer 20B is the interactive display layer 20B discussed above in relation to the arrangements illustrated in Fig. 1A, Fig. 1B, or Fig 1C. For example, the interactive display layer 20B comprises one, or more, electromagnetophoretic pigments. For example, the interactive display layer 20B comprises a magnetically actuatable material that changes from a first visual state into a second visual state upon the application of an incident magnetic field of a predetermined magnitude. The visual state may, for example, be a level of colour or saturation of the interactive display layer 20B subjectively apparent to a user U. The magnetically actuatable material is, for example, a bistable magneto responsive electrophoretic display also known as electro magneto phoretic. A bistable magneto responsive electrophoretic display can change visual state in the presence of a localised constant magnetic field.

In an embodiment, the magnetically actuatable material is an electromagnetophoretic material.

In addition, the magnetically actuatable material is also electrically actuatable, for example in the presence of an electric field. In an embodiment, the application of an electric field to a portion of the interactive display layer 20B changes the visual state of the interactive display layer 20B subjectively perceivable by the user U from either of the first or second visual states to third or fourth visual state. The third or fourth visual states may exhibit a greater degree of saturation and contrast as compared to the first or second visual state. In an embodiment, the range of saturation and/or contrast levels between the first and second visual state is smaller than the range of saturation and/or contrast levels between the third and fourth visual states.

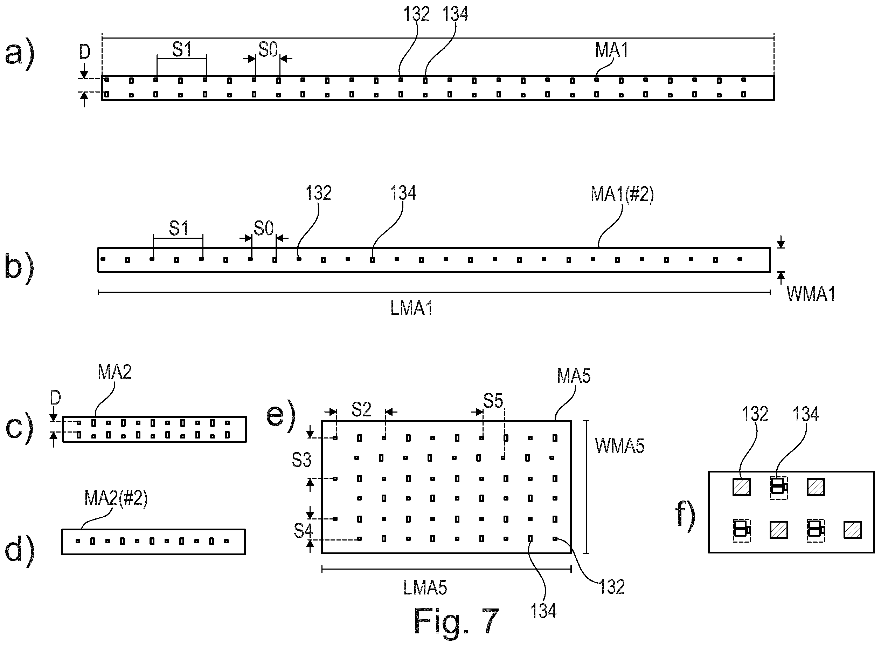

The electronic interactive display 10 further comprises an electronics module 18 comprising at least a power source 14, processing circuitry 16, and a plurality of magnetometers M. In the example of Fig. 2, an array of six magnetometers is illustrated, but a larger or smaller number of magnetometers can be used, as will be discussed in connection with Fig 7.

The electronics module 18 can be a single unit, or the electronics can be distributed among a number of locations around the electronic interactive device 10. For example, the plurality of magnetometers M can be distributed around portions, entirety, of the frame 11A, 11B of the electronic interactive device 10, and another electronics module 18 comprising the power supply 14 and processing circuitry 16 can be mounted e.g. to the back panel 13. In this case, the plurality of magnetometers M are connected to the processing circuitry 16 using electronic traces in the back panel 13 and/or the substrate 12 of the electronic interactive device 10.

The plurality of magnetometers M enables the electronic interactive device 10 to track a user borne device 50 that comprises at least one permanent magnet 54 when the user borne device is moved within a sensing volume S of the electronic interactive device 10.

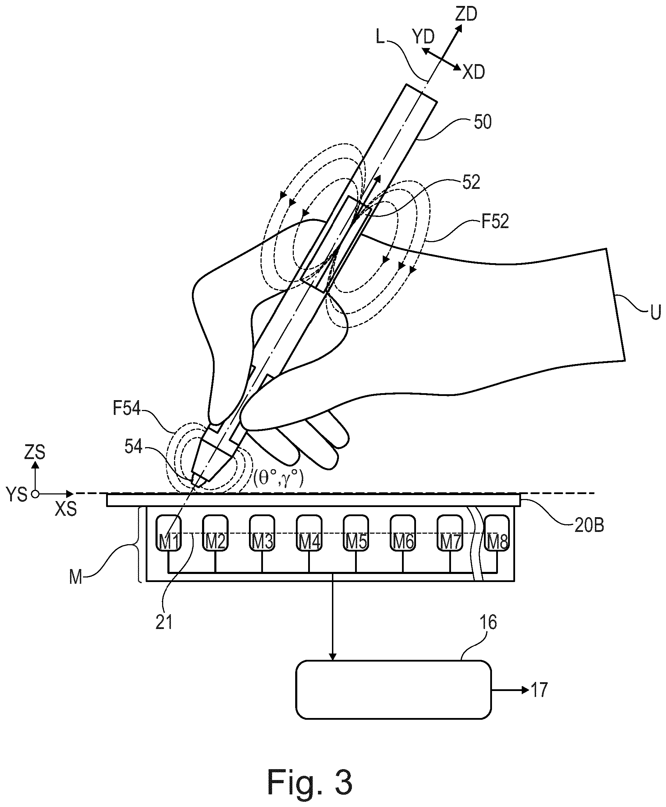

The illustration of the sensing volume S as a cuboid shape is exemplary, and the sensing volume typically has aspatial envelope dependent on the positioning of the plurality of magnetometers, and/or signal processing applied to the signals obtained from the plurality of magnetometers M. Further aspects of the detection of the position of the user borne device 50 relative to the electronic interactive display 10 using the plurality of magnetometers M will be discussed in relation to Fig. 3. In brief, the reference coordinate system of the electronic interactive display 10 is defined by the arrangement of the plurality of magnetometers M. In an example, each magnetometer of the plurality of magnetometers is a triaxial magnetometer.

The electronic interactive device 10 illustrated in Fig. 2 is a tablet computer intended to be used with a user borne device 50. The user-borne device 50 may, for example, be a computer mouse, a dial, a ring, a toy, a keyboard, a joystick or a stylus. A stylus-type user borne device 50 is illustrated in Fig. 2.

In the illustrated embodiment, the substrate 12 is rigid, along with the associated frame 13 and backing 11.

In an embodiment, a portion, or all, of the substrate 12 is flexible. The plurality of magnetometers M should have a rigid spatial relationship, and thus a rod comprising the plurality of magnetometers M and the electronics 18 can be attached to a flexible roll manufactured, for example, using printable electronics. The flexible roll can comprise the interactive display layer 20B, and, in examples, the first and second electrode arrays.

The user-borne device 50 comprises a first magnet 54 and a second magnet 52. The user-borne device 50 is translatable and/or rotatable, for example, laterally on an interaction surface of the electronic interactive device 10. In the illustrated example of Fig. 2, the interaction surface is the first electrode array 20A. In an example, the first magnet 52 of the user borne device 50 generates a magnetic field on the magnetically responsive pigments in the interactive display layer 20B to change its response from a first visual state to a second visual state. In an example, the magnetic moment of the second magnet 52 of the user borne device is tracked by the plurality of magnetometers. The plurality of magnetometers performs magnetic field measurements within the sensing volume S and output magnetic field measurement data.

In use, the processing circuitry 16 determines the location (position and/or orientation) of the user device 50 by processing the magnetic field measurement data obtained by the plurality of magnetometers M. The processing circuitry 16 can, for example, determine when the proximal end P of the user borne device 50 has been brought within a distance range d that is close enough for the magnetic field F54 of the first magnet 54 to change the visual state of the interactive display layer 20B from a first visual state to a second visual state, or vice versa.

When the processing circuitry 16 determines that the user borne device 50 has been brought within a distance range d that is close enough for the magnetic field F54 of the first magnet 54 to change the visual state of the interactive display layer 20B from a first visual state to a second visual state, the processing circuitry 16 may track or record the portions of the screen of the electronic interactive display that have been changed from the first visual state into the second visual state by the first magnet 54.

In an embodiment, the processing circuitry 16 is configured to detect, using the determined position and/or orientation of the user borne device 50, that the at least one user borne device 50 has transformed the portion of the interactive display layer 20B from the first visual state to the second visual state, and to generate, using the processing circuitry 16, screen representation data comprising the position of the transformed portion of the interactive display layer 20B.

The processing circuitry 16 may generate, for example, a bitmap of the YS, XS plane of the interactive display layer 20B that is a close or accurate representation of the appearance of the YS, XS plane of the interactive display layer 20B after having been magnetically addressed by the first magnet 54 of the user borne device 50. In an example, this bitmap can be output as an output file or output mask or output data as screen representation data representing the user input onto the electronic interactive display 10.

In an embodiment, the screen representation data can provide, for each spatial portion in the XS, YS plane of the interactive display layer 20B, a greyscale representation representing the user input onto the electronic interactive display 10. In this case, the first magnet 54 will cause a more saturated or less saturated change in the appearance of the interactive display layer 20B based on how close, and/or for how long, or with what orientation, the first magnet 54 has been held relative to a given portion of the interactive display layer 20B. In this embodiment, the plurality of magnetometers M can, therefore, track, for each (XS, YS) coordinate of the interactive display layer 20B, the relative distance separation d of the proximal end P of the user borne device 50 interactive display layer 20B.

Fig. 3 schematically illustrates a plurality of magnetometers comprised in an electronic interactive display.

The plurality of magnetometers M may be fixedly arranged in the casing of the electronic interactive device 10. The plurality of magnetometers M define a fixed position and/or orientation with respect to each other. A magnetometer plane 21 may be defined by a plane that extends through a majority of the plurality of magnetometers 300. More specifically, the magnetometer plane 21 may extend through centres, more specifically geometric centres, of a majority of the plurality of magnetometers M. In other words, most of the magnetometers of the plurality of magnetometers M may be arranged in a common plane, i.e., the magnetometer plane 21. However, one or more magnetometers of the plurality of magnetometers M may be distanced and/or inclined with respect to the common plane, e.g., due to manufacturing issues and/or tolerances and/or manufacturing design constraints. The magnetometer plane M may additionally or alternatively be defined by a plane in which the magnetometers of the plurality of magnetometers M are predominantly arranged.

As indicated in Fig. 2, the electronic interactive display 10 may comprise a reference coordinate system XS, YS, ZS comprising a first reference axis XS, a second reference axis YS and a vertical reference axis ZS. The first reference axis XS and the second reference axis YS may be defined parallel to the magnetometer plane 21 and may be orthogonal to each other. The vertical reference axis ZS may be orthogonal to the magnetometer plane 21. Furthermore, the vertical reference axis ZS may extend through a centre of the plurality of magnetometers M.

Referring to Fig. 3, an arrangement of the plurality of magnetometers M with respect to the interactive display layer 20B is shown. As outlined above, the plurality of magnetometers M is configured to measure a magnetic field associated with the magnets 52, 54, and/or 56 of the user borne device 50.

The processing circuitry 16 may be configured to determine magnetic field measurement data based on the collected magnetic field measurements within the sensing volume S relative to the reference coordinate system XS, YS, ZS. Magnetic field measurement data may be indicative of a magnetic object position and/or a magnetic object orientation associated with the at least one magnet 52, 54, 56 relative to the reference coordinate system XYZ, more specifically to the magnetometer plane 21.

The magnetic object orientation may be defined by a set of magnetic object orientation angles (θ, γ) relative to axes of the reference coordinate system. More specifically, respective magnetic object orientation angles (θ, γ) may be measured between a magnetic moment vector of the magnet 52 and the respective axes XS, YS, ZS of the reference coordinate system.

As outlined above, each magnetometer of the plurality of magnetometers M may be configured to measure the magnetic field F52, F54 in the direction of the first reference axis XS, the second reference axis YS, and/or the vertical reference axis ZS. In other words, each magnetometer of the plurality of magnetometers M may be configured to perform magnetic field measurements in the direction of two axes (i.e., two dimensions XS, YS) or three axes (i.e., three dimensions XS, YS, ZS) or even in a single axis, particularly ZS, to obtain e.g. spatial representations, pressure and/or grayscale representations of writing or sketching on the interactive display layer 20B, and the magnetic field measurements are used to compute the obtained data on the screen(for example, as bitmaps).

The number of magnetometers provided may depend on the size of the interactive display layer 20B, the accuracy needed, the magnet used, and the detection distance required of the magnet on which the user-borne device 50 is operated.

In the embodiment shown in Fig. 3, the plurality of magnetometers M may be arranged in rows, or rows and columns. However, it is also possible that the plurality of magnetometers may be arranged in an unordered manner within the electronic interactive display 10. A calibration procedure may be used to determine the exact locations (more specifically, positions and/or orientations) and measurement axes of each magnetometer within the electronic interactive device relative to the reference coordinate system. Furthermore, a sensitivity and/or an offset of each magnetometer may also be calibrated. The plurality of magnetometers M are shown in Fig. 3 as being arranged in the magnetometer plane 21 (i.e., in the same plane relative to the vertical reference axis ZS). However, as outlined above, one or more of the magnetometers may be distanced to the magnetometer plane 21, more specifically distanced in the direction of the vertical reference axis ZS.

Magnetic field measurement data from each magnetometer of the plurality of magnetometers M representing a magnetic field inside the sensing volume S are processed according to the techniques set out in US 9,507, 443 B2, for example. Thereby, the magnetic field measurement data can be used to determine the location of the user borne device 50 within the sensing volume S.

The processing required to determine the location of the user borne device 50 relative to the interactive display layer 20B can be performed, for example, by the processing circuitry 16. In embodiments, a separate coprocessor can determine the location of the user borne device 50 relative to the interactive display layer 20B and provides location as an input to the processing circuitry 16.

In an embodiment, the processing circuitry 16 is configured to localize a proximal or distal end of a user borne device 50 to less than 1mm perpendicular to the surface of the interactive display layer 20B.

In an embodiment, the processing circuitry 16 is configured to is configured to localize a proximal or distal end of a user borne within the sensing volume S to no more than 300mm perpendicular to the surface of the interactive display layer 20B.

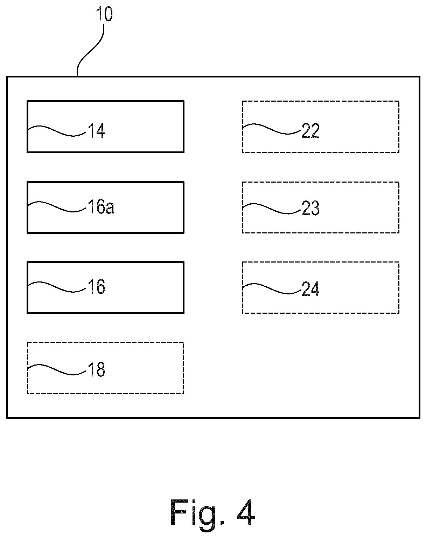

Fig. 4 schematically illustrates electronic functional modules of an electronic interactive display 10.

The electronic functional modules may be integrated into, or connected to, one or more printed circuit boards or items of printable electronics.

The power source 14 may comprise, for example, a chemical battery such as a lithium ion battery. Alternatively, a wired power source based on a DC-DC converter can provide the electronic interactive display 10 with electrical power.

In an embodiment, the processing circuitry 16 comprises a data processor or data processing chipset based on an ARM (TM) or Intel (TM) processor core, for example. According to an embodiment, the processing circuitry 16 is configured to output the screen representation data via the communication interface 18.

According to an embodiment, the data processor or data processing chipset is configured to instantiate and host an embedded operating system for operating the electronic interactive device. The embedded operating system can host device drivers for operating the plurality of magnetometers M and any coprocessor associated with them. The device drivers may further operate the communication interface 18, electric drive circuitry 22, capacitive position sense circuitry 23, resistance position sense circuitry 24, and non-volatile memory 25. The embedded operating system can host device drivers capable of operating the power source 14.

In an embodiment, the processing circuitry 16 comprises a coprocessor configured to receive magnetic field measurement data from the plurality of magnetometers M and output, for example, location data of a position and/or orientation of a user borne device 50 to the processing circuitry 16. However, the position determination processing can be performed by the processing circuitry 16 in other embodiments, without the need for a coprocessor.

In an embodiment, the electronic interactive display further comprises a communication interface 18 communicably coupled to the processing circuitry 16. In embodiments, the communication interface 18 may communicate using I2C (TM), USB (TM), SPI (TM), USART (TM) or a wireless interface such as WiFi (TM), Bluetooth (TM) or Bluetooth low energy (TM),, a wired ethernet interface, or an IrDA interface.

In an embodiment, the electronic interactive display 10 further comprises electrode drive circuitry 22. The electrode drive circuitry 22 is capable of energising portions of at least a first and/or a second electrode array 20A, 20C.

In an embodiment, the electronic interactive display 10 further comprises capacitive position sense circuitry 23.

In embodiments comprising a capacitive touch sensing layer 20E, the capacitive position sense circuitry 23 generates a location in the (XS, YS) plane based on the touch location on the electronic interactive display 10 of a user borne device 50, or, for example, another element such as a user's finger. In this embodiment, the proximal end or tip of the user borne device comprises a conductive tip, for example. The capacitive position sense circuitry 23 may process mutual inductance, or self-inductance position detection, for example. The capacitive position sense circuitry 23 provides the current location in the (XS, YS) plane to the processor 16. In an embodiment, the capacitive position sense circuitry 23 may generate a signal which is a proxy for pressure on the touch sensing layer 20E based on the detected size of a finger pad, for example.

In an embodiment, the electronic interactive display 10 further comprises force sense resistance position sense circuitry 24. In embodiments comprising a force sense resistance sensing layer 20F, the force sense resistance position sense circuitry 24 generates a location in the (XS, YS) plane based on the touch location on the electronic interactive display 10 of a user borne device 50, or, for example, another element such as a user's finger exerting a physical pressure on the interactive display layer 20B. The force sense resistance position sense circuitry 24 provides the current location in the (XS, YS) plane, and, in examples, a proxy measurement of the exerted pressure at that point, to the processing circuitry 16.

In an embodiment, the electronic interactive display 10 further comprises non-volatile memory 25. The non-volatile memory is configured, for example, to store a computer program element for executing the computer implemented method according to the third aspect, or its embodiments, on the processing circuitry 16 of the electronic interactive display 10. In embodiments, the non-volatile memory may further store operational or library data. In embodiments, the non-volatile memory stores a pen trace library specifying a trace width as a function of detected orientation (θ,γ) of the user borne device, and/or pressure or detected height of the user borne device 50, for example.

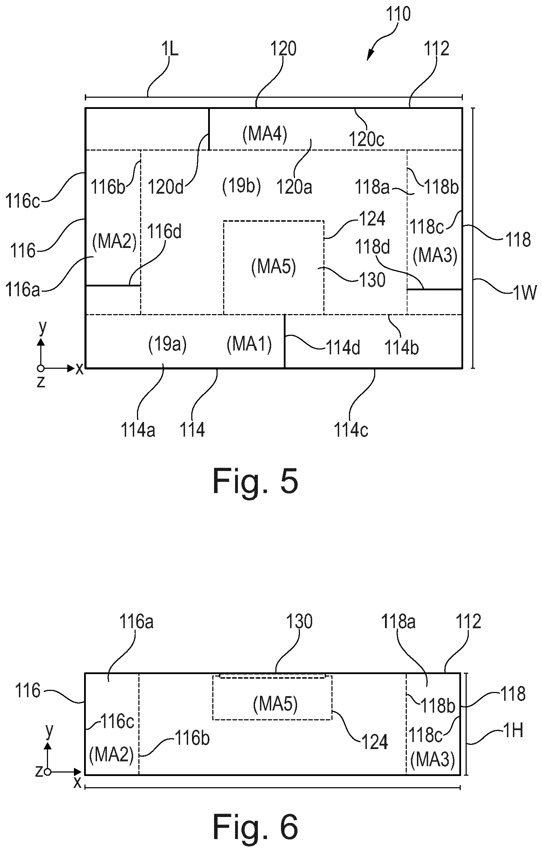

Fig. 5 schematically illustrates placement locations for a plurality of magnetometers M relative to the substrate of an electronic interactive display 10. In general, pluralities of magnetometers M may be placed around the frame 11 of an electronic interactive device 10 defined by regions 116a, 118a, 114a, 116a, and/or in the central region of the electronic interactive device 10, and having height 1H, width 1W, and length 1L.

Fig. 5 omits depiction of all other elements of an electronic interactive display 110, such as printed circuit boards and batteries, to enable the boundaries of the mounting regions of the pluralities of magnetometers to be more clearly visible.

In the following discussion, the "enclosure" 112 is the enclosure of the electronic interactive device 10. In this discussion, it is assumed that the enclosure 112 has a square or rectangular shape, although a skilled person will appreciate that the general mounting zones for magnetometer arrays defined below can be approximated to apply to enclosures having rounded corners or other forms, for example.

According to an example, the length of the enclosure 112, defined by 1L, is in one of the ranges 5cm - 10cm, 10cm-15cm, 15cm-20cm, 20cm-25cm, 25cm-30cm, 30cm-35cm, or 35cm-40cm.

According to an example, the width of the enclosure 112, defined by 1W, is in one of the ranges 5cm - 10cm, 10cm-15cm, 15cm-20cm, 20cm-25cm, 25cm-30cm, 30cm-35cm, or 35cm-40cm.

According to an embodiment, magnetometers physically located in the first portion 114a exclusively comprise magnetometers operably coupled to the first plurality of magnetometers MA1. Magnetometers not associated with the first plurality of magnetometers MA1 are not physically located within the first portion 114a.

According to an embodiment, magnetometers physically located in the second portion 116a exclusively comprise magnetometers operably coupled to the second plurality of magnetometers MA2. Magnetometers not associated with the second plurality of magnetometers MA2 are not physically located within the second portion 116a.

According to an embodiment, magnetometers physically located in the third portion 118a exclusively comprise magnetometers operably coupled to the third plurality of magnetometers MA3. Magnetometers not associated with the third plurality of magnetometers MA3 are not physically located within the third portion 118a.

According to an embodiment, magnetometers physically located in the fourth portion 120a exclusively comprise magnetometers operably coupled to the fourth plurality of magnetometers MA4. Magnetometers not associated with the fourth plurality of magnetometers MA4 are not physically located within the fourth portion 120a.

According to an embodiment, magnetometers physically located in the fifth portion 130 exclusively comprise magnetometers operably coupled to the fifth plurality of magnetometers MA5. Magnetometers not associated with the fifth plurality of magnetometers MA5 are not physically located within the fifth portion 130.

According to an embodiment, a line orthogonal to, and separating, the first surface 114 of the enclosure 112 and the first inner boundary plane 114b defines a first portion separation distance 114d, and a ratio between the first portion separation 114d distance and the width W of the enclosure 12 is less than one of: 0.25, 0.2, 0.15, 0.1, or 0.05.

According to an embodiment, the first portion separation distance 114d is less than one of: 1mm, 2mm, 3mm, 4mm, 5mm, 10mm, 15mm, or 20mm.

According to an embodiment, the first portion 114a of the enclosure 112 comprising the first plurality of magnetometers MA1 has a cuboidal shape defined by a first portion length, a first portion width, and a first portion height.

According to an embodiment, the first surface of the enclosure 112 is closest to, and faces, a user of the electronic interactive device 10, in operation.

According to an embodiment, the first portion 114a of the enclosure 112 has a length greater than one of 10%, 20%, 30%, 40%, 50%, 60%, 70%, 80%, 82.5%, 85%, 87.5%, or 90%, 92.5%, 95%, or 97.5% of the total length 1L of the enclosure 112.

According to an embodiment, the first portion 114a is centred about a line of symmetry of the enclosure 112, or the first portion 114a abuts a second surface 116 or a third surface 118 that are, respectively, perpendicular to the first surface 114 of the enclosure 112.

According to an embodiment the first portion 114a extends along substantially the entire length L of the enclosure 112.

According to an embodiment, the electronic interactive device 110 further comprises:
- a second plurality of magnetometers MA2 relative to the reference coordinate system of the enclosure 112, wherein the second plurality of magnetometers MA2 is encompassed by the enclosure 112. The second plurality of magnetometers MA2 is located within a second portion 116a of the enclosure 112. The location of the second portion 116a is within a second outer boundary plane 116c coterminous with the second surface of the enclosure 112, and a second inner boundary plane 116b parallel to the second outer boundary plane 116c.

According to an embodiment, a line orthogonal to, and separating, the second surface of the enclosure 112 and the second inner boundary plane 116b defines a second portion separation distance 116d, and a ratio between the second portion separation distance 116d and the length L of the enclosure 112 is less than one of: 0.25, 0.2, 0.15, 0.1, or 0.05.

According to an embodiment, the second portion separation distance 116d is less than one of: 1mm, 2mm, 3mm, 4mm, 5mm, 10mm, 15mm, or 20mm.

According to an embodiment, the electronic interactive device 110 further comprises a third plurality of magnetometers MA3 relative to the reference coordinate system of the enclosure 112, wherein the third plurality of magnetometers MA3 is encompassed by the enclosure 112. The third plurality of magnetometers MA3 is located within a third portion 118a of the enclosure 112, and the location of the third portion 118a is within a third outer boundary plane 118c coterminous with a third surface 118 of the enclosure 112, and a third inner boundary plane 118b parallel to the third outer boundary plane 118c.

According to an embodiment, a third portion separation distance 118d is defined in a direction orthogonal to, and in-between, the third surface 118 of the enclosure 112 and the third inner boundary plane 118b, and a ratio between the third portion separation distance 118d and the length 1L of the enclosure 112 is less than one of: 0.25, 0.2, 0.15, 0.1, or 0.05.

According to an embodiment, the third portion separation distance 118d is less than one of: 1mm, 2mm, 3mm, 4mm, 5mm, 10mm, 15mm, or 20mm.

According to an embodiment, the third plurality of magnetometers MA3 is proximate to the third surface 118 of the enclosure 112.

According to an embodiment, the electronic device 110 further comprises a fourth plurality of magnetometers MA4 relative to the reference coordinate system of the enclosure 112. The fourth plurality of magnetometers MA4 is encompassed by the enclosure 112. The fourth plurality of magnetometers MA4 is located within a fourth portion 120a of the enclosure 112. The location of the fourth portion 120a is within a fourth outer boundary plane 120c coterminous with a fourth surface 120 of the enclosure 112, and a fourth inner boundary plane 120b parallel to the fourth outer boundary plane.

According to an embodiment, the fourth surface 120 of the enclosure 112 is furthest from, and faces away from, a user of the electronic device 10, in operation.

According to an embodiment, the enclosure 12 comprises at least a user interaction portion 8 in a user interaction plane at a reference height above a base portion of the enclosure 12). The electronic device 110 further comprises a fifth plurality of magnetometers (MA5) encompassed by the enclosure 112.

Fig. 6 schematically illustrates a side cut through view of placement locations for a plurality of magnetometers relative to the substrate of an electronic interactive display 10. The height of the enclosure 1H is in one of the ranges 0-2mm, 2-3mm, 3-4mm, 4-5mm, 5-6mm, 6-7mm, 7-8mm, 8-9mm, 9-10mm, 10-15mm, 15-20mm.

Fig. 7 schematically illustrates different sets of magnetometer arrays M.

Alternatively, these may be named groups of magnetometers or magnetometer arrays.

Fig. 7a) illustrates a linear plurality of magnetometers MA1 having an aspect ratio suitable for use proximate to, or in contact with, a frame member 11A, 11B of an electronic device 10 such as a tablet. According to an example, the aspect ratio (width:length) of the printed circuit board supporting the plurality of magnetometers is 1:30, 1:25, 1:20, 1:15, or 1:10. The example of Fig. 7a) illustrates a linear plurality of magnetometers MA1 comprising two rows of magnetometers separated by pitch distance D. The magnetometers 132 of each row are separated by a distance S1. In an example, the magnetometers of the first row are offset relative to the magnetometers of the second row by an offset distance S0. According to an embodiment, passive components 134 required for the operation of each magnetometer 132 are provided in a gap defined by the offset distance S0.

Fig. 7b) illustrates a variant of Fig. 7a) in which a linear plurality of magnetometers MA1#2 is provided in a single row.

Fig. 7c) illustrates a plurality of magnetometers arranged in a set of two offset rows mounted on a printed circuit board suitable for use proximate to the second 116 or third 118 surfaces of an enclosure 12 of an electronic device 10. In particular, the printed circuit board MA2 may have an aspect ratio (width:length) of 1:10, 1:7, 1:5, or 1:3.

Fig. 7d) illustrates a plurality of magnetometers arranged on a printed circuit board in a single line.

Fig. 7e) illustrates a two-dimensional matrix of magnetometers suitable for use, for example, underneath an interactive display layer 20B in a fifth plurality of magnetometers MA5 as discussed previously in this specification. The printed circuit board comprises a width dimension WMA5 and a length dimension LMA5. In the length dimension, a separation of magnetometers 34 is defined by the distance S2. An offset in the length direction between magnetometers 34 on adjacent rows of the matrix is defined by dimension S5. In the width dimension, a separation of rows is defined by dimension S4.

Fig. 7f) illustrates a view of a magnetometer array showing more detail of the arrangement of magnetometers 132 relative to offset passive components 134.

According to an embodiment, the first to fifth pluralities of magnetometers M1-5 each comprises a network of N magnetometers arranged in a row or matrix, more specifically wherein N is greater than 5, 16, 32, 64, 128, or 256.

In an embodiment, wherein the interactive display layer 20B further comprises one, or more, electrode arrays 20A, 20C, and the one, or more, electrode arrays 20A, 20C are configured to apply an electric field to one, or more, spatial portions of the interactive display layer 20B.

The combination of an electronic interactive display having a plurality of magnetometers M and an interactive display layer 20B comprising a magnetically actuatable material enable several new applications which will now be discussed.

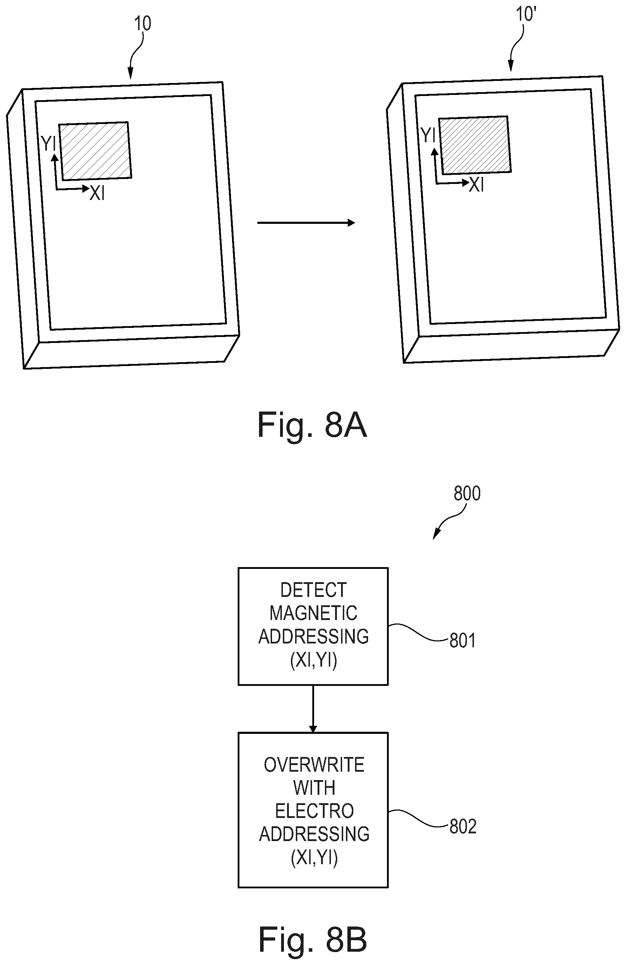

Fig. 8A schematically illustrates altering an image between visual states.

The example concerns an interactive display layer 20B that is disposed in a layer along with one, or more, electrode arrays 20A, 20C In this example, a magnet 54 located at the proximal end P of a user borne device 50 is initially used to provide a trace in the interactive display layer 20B that switches the interactive display layer 20B between a first visual state and the second visual state. At the time the trace is being magnetically addressed in the interactive display layer 20B, the plurality of magnetometers M is used by the processing circuitry 16 to record the corresponding locations (XI, YI) that have been changed from the first visual state into the second visual state, for example. The processing circuitry 16 is typically capable of measuring or calculating the location of the user borne device 50 and the corresponding locations (XI, YI) that have been changed from the first visual state into the second visual state based on the magnetic field from the second magnet 52 and sensed by the plurality of magnetometer M, for example.

In embodiments, the interactive display layer 20B is configurable into third and fourth visual states, respectively, based on the polarity of the electric field applied by the one, or more, electrode arrays 20A, 20C.

In an embodiment, wherein driving and/or updating the one, or more, electrode arrays 20A, 20C based on the screen representation data causes the processing circuitry 16 to transform the portion of the interactive display layer 20B that has been previously been transformed from the first visual state to the second visual state via magnetic actuation of the user borne device 50, into the third or fourth visual states by driving the one, or more, electrode arrays 20A, 20C based on the screen representation data.

In embodiments, the third and fourth visual states have higher contrast than the first and second visual states.

In embodiments, the processing circuitry 16 can transform the portion of the interactive display layer 20B that has previously been transformed from the first visual state to the second visual state into one of the third or fourth visual states with the latency of less than 100ms, 75ms, 50ms, 45ms, 40ms, 35ms, 30ms, 25ms, 20ms, 15ms, 10ms, or 5ms. In this way, change of the interactive display layer from the first visual state to the second visual state into one of the third or fourth visual states is subjectively difficult for a user U of the electronic interactive display 10 to perceive.

Another use of the electronic interactive display, according to an embodiment of the first aspect, is to prepare an interactive display layer 20B for writing of a portion, or the entirety, of the interactive display layer 20B based on the proximity of a user borne device to the interactive display layer 20B detected by a plurality of magnetometers M. This is referred to as display priming.

Fig. 8B schematically illustrates a computer implemented method 800 for altering an image between visual states.

The computer implemented method 800 may be executed by the processor circuitry 16 of the electronic interactive display 10. In particular, in step 801, the processor circuitry 16 detects the magnetically addressed location coordinates, or pixels, (X1, Y1) of the interactive display layer 20B. At step 802, the processor circuitry 16 overwrites magnetically addressed location coordinates, or pixels, by biasing one or more pixel electrodes of a first and/or second electrode array 20A or 20C.

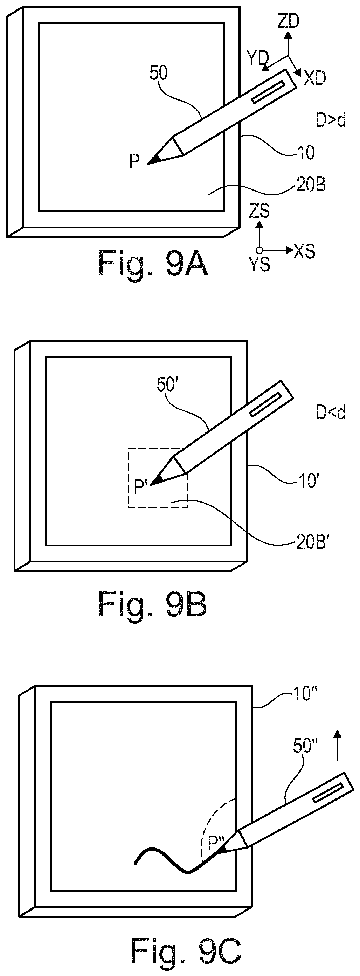

Fig. 9A schematically illustrates a first stage of an electric display priming function.

Fig. 9B schematically illustrates a second stage of an electric display priming function.

Fig. 9C schematically illustrates a third stage of an electric display priming function.

In an embodiment, the processing circuitry 16 is configured to drive the one, or more, electrode arrays 20A, 20C to apply a priming electric field to at least a subset of the interactive display layer 20B that corresponds to the determined location of the user borne device 50 obtained using the plurality of magnetometers M.

For example, in Fig. 9A, the proximal end P of a user borne device 50 comprising a magnet 54 for actuating the magnetically actuatable material of the interactive display layer 20B is held at a degree of distance separation D that is greater than the maximum distance separation distance d. This separation of the proximal end P of the user borne device 50 from the interactive display layer 20B is determined by the processing circuitry 16 based on the magnetic field measurement data of the magnet 52 comprised in the user borne device 50 obtained from the plurality of magnetometers M.

In Fig. 9B, the proximal end P' of the user borne device 50' is moved by a user so that the separation distance D is less than the maximum separation distance d at which the magnet 54 for actuating the magnetically actuatable material of the interactive display layer 20B' begins to have an effect on the magnetically actuatable material of the interactive display layer 20B'. The processing circuitry 16 monitors the position in the XS, YS, and ZS dimensions of the electronic interactive display 10 based on the position of magnet 52 of the user borne device 50' in order to make this determination. In an embodiment, a coordinate transformation from the coordinate system of the user borne device 50 (XD, YD, ZD) into the coordinate system of the electronic interactive display 10 is performed by the processing circuitry 16 to enable the determination to be made.

As a consequence, the processing circuitry 16 activates a driver circuit 22 configured to apply an electric field proximate to the (XS, YS) coordinate of the proximal end P' of the user borne device 50' detected by the processing circuitry 16. The processing circuitry 16 therefore causes first and/or second electrode arrays 20A, 20C to be energised by application of an electrical field capable of priming the magnetically actuatable material (because the magnetically actuatable material is an electromagnetophoretic material, it also responds to electric actuation). In other words, the processing circuitry 16 can enhance the drawing by providing more contrast (using the electrical addressing subsystem) than the drawing made by magnetic actuation.

In an embodiment, the first and/or second electrode arrays 20A, 20C across the entire width and length of the interactive display layer 20B are energised, and in this case the processing circuitry 16 does not need to track the (XS, YS) coordinate of the proximal end P' of the user borne device 50', because the entire interactive display layer 20B is primed.

According to another embodiment, first and/or second electrode arrays 20A, 20C across a priming region (subset) of the width and length of the interactive display layer 20B are energised, for example by applying an electric field to pixels of the first and/or second electrode arrays 20A, 20C proximate to the priming region. For example, a square or circular region of the interactive display layer 20B centred on the (XS, YS) coordinate of the proximal end P' of the user borne device 50'is primed. The square or circular region of the interactive display layer 20B that is primed can represent a fraction of the total area of the interactive display layer 20B of 1%, 5%, 10%, 15%, or 20%.

In Fig. 9C, the electronic interactive display 10'', with a suitably primed subset of the interactive display layer 20B near the proximal end of the user borne device 50'', displays a trace applied by the magnet 54 of the user borne device 50''. The trace is in the third or fourth visual state of the interactive display layer 20B, as opposed to the first or second visual states, because the priming of the interactive display layer 20B with an electric field causes the pigments of the electromagnetophoretic display to be more easily moved inside the interactive display layer 20B by the magnetic field of the magnet 54 in the user borne device 50".

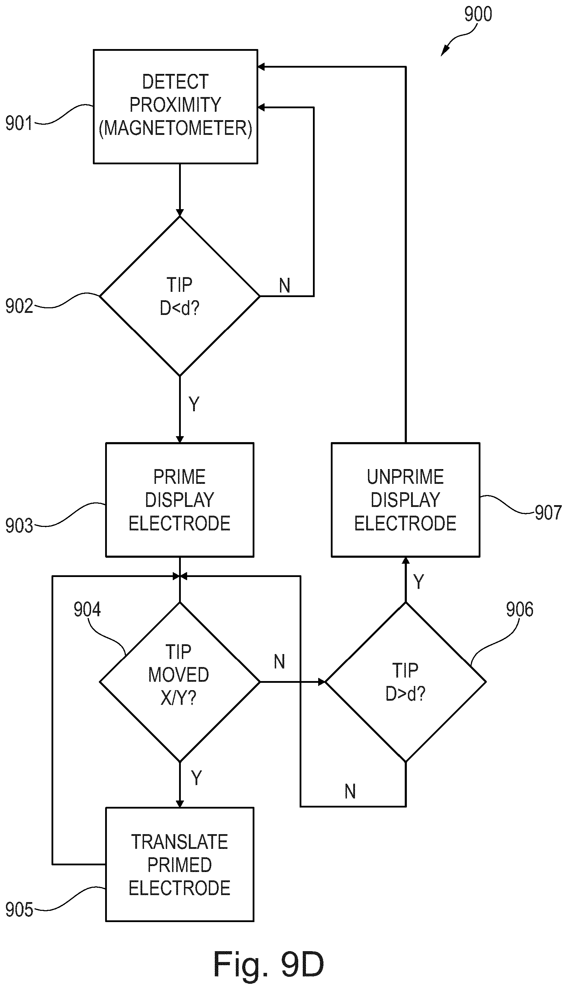

Fig. 9D schematically illustrates a computer implemented method 900 for electric display priming. For example, in step 901 the processing circuit 16 obtains the proximity d of the proximal end of a user borne device 50 from the interactive display layer 20B by performing magnetic field measurements of the magnet 52 of the user borne device 50 and digitising the location of the proximal end of the user device 50. In step 902, a determination is made if the proximal end (tip) of the user borne device 50 is within a threshold distance from the interactive display layer 20B. If the condition is not satisfied, program flow is returned to step 901. If the condition is satisfied, the display electrode is primed in step 903 according to an arbitrary priming pattern, for example. The processing circuitry 16 continuously samples the location of the proximal end of the user borne device 50 by tracking the location of magnet 52 Using the plurality of magnetometers M. If movement (lateral translation in the XS, YS plane) of the proximal end of the user borne device 50 is detected by the processing circuitry 16 relative to the interactive display layer 20B, the processing circuitry 16 adjusts the addressing of the energised first and/or second electrode arrays at step 905 to thus translate the primed electrode region. If the proximal end of the user borne device 50 is detected by the processing circuitry 16 to have been withdrawn such that the tip is further than the threshold distance in the ZS dimension relative to the interactive display layer 20B, the primed electrode regions may be de-energised.

Additionally, or alternatively, a force sensing resistor (FSR) array 20F is located between the substrate 12 and the interactive display layer 20B. The FSR array 20F is configured to track and detect motion changes of at least one electrically and/or electronically passive user borne device 50 that houses at least one permanent magnet 52, 54.

In embodiments, the interactive display layer 20B further comprises a capacitive touch sensing layer 20E and/or a force sensing resistor layer 20F. The processing circuitry 16 is further configured to localise a proximal end of the user borne device 50 or another object using the capacitive touch sensing layer 20E and/or the force sensing resistor layer 20F.

For example, the force sensing resistor layer 20F is configured to detect a pressure applied by a proximal end P of the user borne device 50. The priming field applied by the first and/or second electrode arrays 20A, 20C is proportional to the pressure detected by the force sensing resistor layer 20F. In one example, a first pressure that is lower than a second pressure detected by the force sensing resistor layer 20F results in the proximal magnet 54 of the user borne device 50 causing a less saturated trace on the interactive display layer 20B. In one example, a first pressure that is higher than a second pressure detected by the force sensing resistor layer 20F results in the proximal magnet 54 of the user borne device 50 causing a more saturated trace on the interactive display layer 20B. This results in a more realistic subjective writing experience, for example.

In an embodiment, the processing circuitry 16 is configured to detect a spatial portion of the interactive display layer 20B addressed via user interaction with the capacitive touch sensing layer 20E and/or the force sensing resistor layer 20F, and the processing circuitry 16 is configured to change a visual state of the interactive display layer 20B in locations corresponding to the portions addressed using the capacitive touch sensing layer 20E and/or a force sensing resistor layer 20F. For example, the capacitive touch sensing layer 20E can also be used to generate the priming location (XS, YS) of the interactive display layer 20B.

In an embodiment, the force sensing resistor layer 20F and/or the capacitive touch sensing layer 20E detect contact by another object that is not the user borne device 50. For example, either or both of the force sensing resistor layer 20F and/or the capacitive touch sensing layer 20E can detect the touch of a human finger or an ordinary pencil or stylus, and can drive the interactive display layer 20B into the third or fourth visual states.

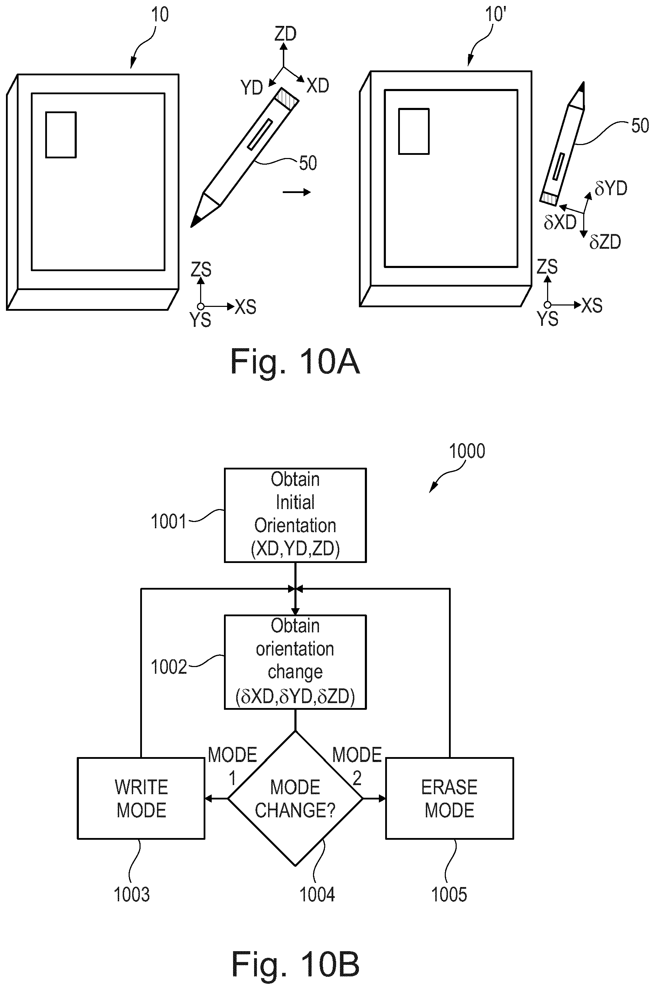

Fig. 10A schematically illustrates changing a mode by reorienting a user borne device.

Fig. 10B schematically illustrates a computer implemented method for changing a mode by reorienting a user borne device.

In general, the reorientation of the user borne device 50 can signal to the processing circuitry 16 a mode change of the electronic interactive display 10. For this purpose, the user borne device 50 can comprise an additional distal magnet 56. In another embodiment, the electronic interactive display 10 may detect the reorientation of the user borne device 50 by tracking the magnet 52by measuring the magnetic field associated with the magnet 52. In an embodiment, the additional distal magnet 56 can have a different polarity, and optimally an opposite polarity to that of the proximal magnet 54. If the proximal magnet 54 is capable of transforming the visual state of the interactive display layer 20B from a first visual state to a second visual state, the distal magnet 56 having an opposite polarity to that of the proximal magnet 54 may, for example, transform the visual state of the interactive display layer 20B from the second visual state to a first visual state. Specifically, this enables the user borne device 50 to be used in the manner of a traditional pencil eraser. However, the erasing provided by the distal magnet 56 may not, in some embodiments, be complete, and magnetic tracking using the plurality of magnetometers M can enable the first and/or second electrode arrays 20A, 20C to drive the erased portions of the interactive display layer 20B into either the third or the fourth visual states, in the inverse manner to writing a trace on the interactive display layer 20B using the proximal magnet 54. This enables convincing erase performance to be provided using the user borne device 50.

In embodiments, the processing circuitry 16 is configured to detect, using the magnetic field measurement data, that a user borne device 50 comprising a magnet has been reoriented in the sensing volume S in the reference coordinate system. The processing circuitry 16 is configured to change from a first operating mode to a second operating mode, or vice versa, when the processing circuitry 16 has detected that the user borne device 50 has been reoriented in the sensing volume.

In embodiments, a first magnet 54 of the user borne device 50 is closer to the interactive display layer 20B compared to a second magnet 52 of the user borne device 50. The processing circuitry 16 defines that the user borne device 50 is operating in a first operating mode. The second magnet 52 of the of the user borne device 50 is closer to the interactive display layer 20B compared to the first magnet 52, the processing circuitry 16 defines that the user borne device 50 is operating in a second operating mode.

In embodiments, the first operating mode is a writing mode of the electronic interactive display 10, and the second operating mode is an erase mode of the electronic interactive display 10. In embodiments, the electronic interactive display 10 does not receive a user command from either a button or menu function of the electronic interactive display 10 to cause the electronic interactive display to change between the first and second operating modes.

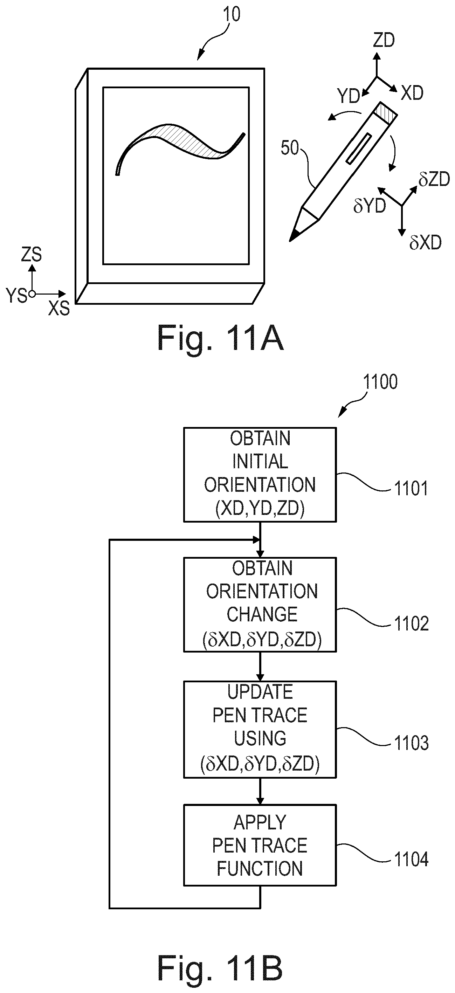

Fig. 11A schematically illustrates applying a trace variation function based on user borne device orientation.

Fig. 11B schematically illustrates a computer implemented method for trace variation based on user borne device orientation.

According to an embodiment, the processing circuitry is configured to obtain a trace variation function from at least one electronic pen model stored on the electronic interactive display. Based on the orientation of the user borne device relative to the interactive display layer determined from the magnetic field measurement data, the transformation from the second into the third or fourth visual states by driving the first and second pixel electrode array based on the screen representation mask data is performed as a function of the at least one electronic pen model and the orientation of the user borne device at a spatial location of the interactive display.

In embodiments, the ability to track the orientation (θ,γ) of the user borne device 50 relative to the surface of the interactive display layer 20B using the plurality of magnetometers M allows the electronic interactive display 10 to generate calligraphic effects as the user U traces or writes on the interactive display layer 20B. In particular, a calligraphic nib effect allows a user to apply a change in thickness of the trace on the interactive display layer 20B based on the orientation (θ,γ) of the user borne device 50, which can be detected by tracking the precession of the magnet 52 using the plurality of magnetometers M as the trace is written. The proximal end magnet 54 of the user borne device 50 may, in such an embodiment, make a trace having the minimal thickness in the interactive display layer 20B. Furthermore, this thin trace is effected using the change in visual state between the first visual state and second visual state of the interactive display layer 20B. In other words, the initial thin trace is affected by purely magnetic interaction of the magnet 54 with the magnetically actuatable material comprised in the interactive display layer 20B.

As the thin trace is made by the usable device 50, the plurality of magnetometers M record the variation in orientation (θ,γ) of the user borne device 50 relative to the surface of the interactive display layer. For each value of orientation (θ,γ), the processing circuitry 16 looks up in a pen trace library (stored on the electronic interactive display 10 in non-volatile memory 25) a corresponding trace thickness defined for each range of orientations (θ,γ). The first and/or second electrode arrays 20A, 20C apply the trace thickness by energising the pixels of the first and/or second electrode arrays 20A, 20C according to the corresponding trace thickness at each (X,Y) location of the pen trace as the user borne device 50 is moved across the interactive display layer 20B. In embodiments, the distance of between the proximal end of the user device and the interactive display layer 20B is used to change the trace thickness. In an embodiment, the pressure applied to the interactive display layer 20B (detected by, for example, an FSR array) is used to change the trace thickness.

In embodiments, the processing circuitry 16 is configured to obtain a trace variation function from at least one electronic pen nib model stored on the electronic interactive display 10. In an embodiment, the electronic pen nib model is a function of orientation (θ,γ) of the user borne device 50, and/or the pressure sensed by a force sensing resistor array 20F of the electronic interactive display 10.

In embodiments, based on the orientation of the user borne device 50 relative to the interactive display layer 20B determined from the magnetic field measurement data, the transformation from the second into the third or fourth visual states by driving the one, or more, electrode arrays 20A, 20B, based on the screen representation data is performed as a function of the at least one electronic pen nib model and the orientation of the user borne device 50 at a spatial location of the interactive display.

**In** an embodiment, the processing circuitry 16 is configured to identify a type of user borne device 50 based on the magnetic field measurement data, and to select at least one electronic pen nib model stored on the electronic interactive display 10 to apply when performing the transformation from the second into the third or fourth visual states based on the selected pen nib model.

**In** embodiments, the processing circuitry 16 is configured to receive, via the communications interface, data for display on the interactive display layer 20B. The processing circuitry 16 is configured to display the data on the interactive display layer 20B using the one, or more, electrode arrays 20A, 20C. The processing circuitry 16 is configured to detect an annotation or erasure made to the data displayed on the interactive display using the magnetic field measurement data of the user borne device 50. The processing circuitry 16 is configured to store the annotation to the data, by one, or both, or modifying the data or appending metadata defining the annotation to the data.

According to this embodiment, a digital file in a typical data format such as portable document format (.pdf) is received via the communications interface, or loaded from non-volatile memory 25 of the electronic interactive device 10, and displayed on the interactive display layer 20B via the operating system executed by the processing circuitry 16 of the electronic interactive device 10. For example, the electric drive circuitry 22 drives the interactive display layer 2 so that the content of the digital file is displayed in the third or fourth visual states on the interactive display layer 20B.

In one example, one, or more, of the plurality of magnetometers, capacitive position sense circuitry 23, or resistance position sense circuitry 24 is configured to detect annotations added to the digital file on the interactive display 20B by a user borne device 50. **In** this example, the operating system of the electronic interactive device is configured to alter the digital file, or generate a copy of the digital file, comprising bitmap or greyscale additions annotations added by the user borne device 50 in the interactive display 20 B. Some versions of portable document format enable annotations to be added as meta data, and in some embodiments, the processing circuitry 16 is configured to read the annotations detected by the capacitive position sense circuitry 23, or resistance position sense circuitry 24 and generate meta data that is added to the original file, representing the annotations.

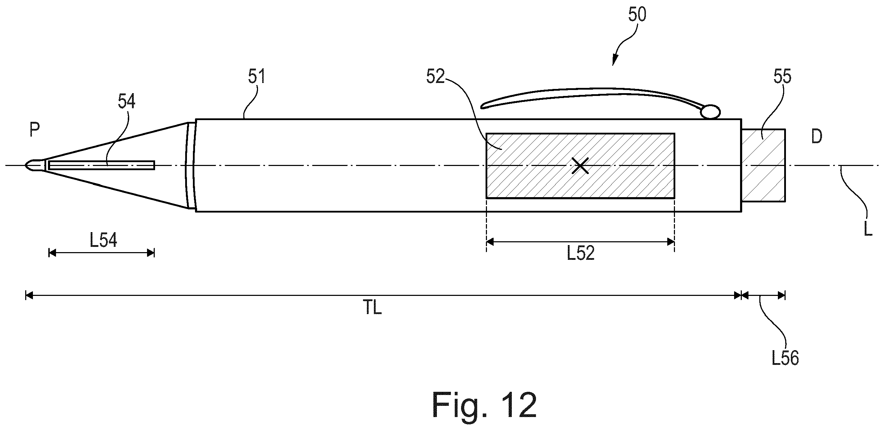

Fig. 12 schematically illustrates a side cut through view of an exemplary user borne device 50.

According to the second aspect, the user borne device 50 for use with an interactive display layer 20B of an electronic interactive display 10 comprising a magnetically actuatable material 19A, 19B comprises an elongate body 51 defining a longitudinal axis L of the user borne device 50. The elongate body 51 comprises a proximal end P and a distal end D.

The user borne device 50 further comprises a first magnet 54 disposed at, or near to, the proximal end of the elongate body 51, and a second magnet 52 disposed along at least a portion of the longitudinal axis of the user borne device in-between the first magnet 54 and the distal end D of the elongate body 51. The second magnet 52 has a magnetic moment that is at least twice as great as the magnetic moment of the first magnet 54.

In an embodiment, the first magnet 54 disposed at, or near to, the proximal end P of the user borne device 50 is configured to provide a magnetic strength characteristic with a relatively concentrated magnetic flux pattern at the surface of an interactive display layer 20B in order to move the pigmented particles of electromagnetophoretic ink. Typically, the first magnet 54 could be up to 40 times smaller in size (length and/or width) than the second magnet 52 used for tracking of the location of the user borne device 50. Typically, the equivalent magnetic moment for the first magnet 54 is 0,004 Am2, for example. Typically, the equivalent magnetic moment for the second magnet 54 is 0,18 Am2, for example.

If the first magnet 54 is made any stronger, it would typically enlarge the area of the activated electromagnetophoretic ink in the interactive display layer 20B of an electronic interactive device 10 according to the first aspect. Legibility would be compromised. Therefore the second magnet 52 used for magnetic tracking should be placed further from the proximal end P of the user borne device 50, to ensure that magnetic tracking using the plurality of magnetometers M is still possible whilst acceptable writing legibility is provided.

In an example, the first magnet 54 can be guided to induce a compact magnetic flux in a small spatial area of the interactive display layer 20B by using a magnet having a small diameter relative to the length of its longitudinal axis. In a specific example, the first magnet 54 and have a diameter between 2 and 3 mm, and a length between approximately 20 mm to 30 mm.

Furthermore, as shown in Fig. 12, the first magnet 54 and the second magnet 52 can be arranged on the common longitudinal axis L of the user borne device 50. According to the fact that the first magnet 54 used for magnetically induced writing on the interactive display layer 20B is physically small (in relation to its magnetic moment) the second magnet 52 for magnetic tracking can be arranged further along the longitudinal axis towards the distal end D of the user borne device 50. In this case, the second magnet 52 intended for magnetic tracking of the user borne device 50 is not disturbed by the smaller (in magnetic flux strength and physical size) first magnet 54. In addition, because the second magnet 52 is disposed further from the interactive display layer 20B during use of the user borne device 50, the second magnet 52 does not change the visual state of the interactive display layer 20B.

In embodiments, the second magnet 52, or a centroid of the second magnet 52, is disposed at a portion of the elongate body 51 defined in a second magnet mounting range L52 along the longitudinal axis L, wherein the second magnet 52 mounting range L52 is defined as being between 0.1 and 0.2, or between 0.2 and 0.3, or between 0.3 and 0.4, or between 0.4 and 0.5, or between 0.5 and 0.6, or between 0.6 and 0.7, or between 0.7 and 0.8, or between 0.8 and 0.9, or between 0.9 and 0.99, of the total length of the elongate body 51, as measured from the proximal end P.

In embodiments, the first and/or second magnets 52 have a total length in one of the ranges between 0.1 and 0.2, or between 0.2 and 0.3, or between 0.3 and 0.4, or between 0.4 and 0.5, or between 0.5 and 0.6, or between 0.6 and 0.7, or between 0.7 and 0.8, or between 0.8 and 0.9, of the total length of the elongate body 51.

In embodiments, the first 54 and/or second magnets 52 have a diameter or thickness perpendicular to the elongate body 51 in one of the ranges of 0.5-1.0mm, 1.0 - 1.5mm, 1.5mm-2.0mm, 2.0mm-2.25mm, 2.25mm-2.5mm, 2.5mm-2.75mm, 2.75mm-3.0mm, 3.0mm - 3.5mm, 3.5mm-4.0mm, 3.5-4.0mm, 4.0-4.5mm, 4.5-5.0mm, 5.0-5.5mm, 5.5-6.0mm, 6.0-6.5mm, 6.5-7.0mm, 7.0-7.5mm, 7.5-8.0mm, 8.0-8.5mm, 8.5-9.0mm, 9.0-9.5mm, 9.5-10.0mm, 10mm.

In embodiments, the total distance of the elongate body 51 between the proximal end and the distal end is greater than 20mm, 25mm, 30mm, 35mm, 40mm, 45mm, 50mm, 55mm, 60mm, 65mm, 70mm, 75mm, 80mm, 85mm, 90mm, 95mm, 100mm, 105mm, 110mm, 115mm, 120mm, 125mm, 130mm, 135mm, 140mm, 145mm, 150mm, 155mm, 160mm, 165mm, 170mm, 175mm, 180mm, 185mm, 190mm, 195mm, or 200mm.

In embodiments, the first magnet 54 is joined to the proximal end via a temporary fixing.

In embodiments, a field F54 emitted by the first magnet 54 changes an appearance of a magnetically actuatable material, for example an electromagnetophoretic material, from a first visual state into a second visual state, in use.

In embodiments, the first magnet 54 has a magnetic moment in one of the following ranges: 0.001 - 0.002 Am2, 0.002 - 0.003 Am2, 0.003 - 0.004 Am2, 0.0035 - 0.0045 Am2, 0.003 - 0.005 Am2, 0.005 - 0.006 Am2, 0.006 - 0.007 Am2, 0.007 - 0.008 Am2, 0.008 - 0.009 Am2, or 0.009 - 0.01 Am2, 0.01 - 0.02 Am2, 0.02-0.03 Am2, 0.03-0.04 Am2, 0.04-0.05 Am2, 0.05-0.06 Am2, 0.06-0.07 Am2, 0.07-0.08 Am2, 0.08-0.09 Am2, or 0.1 Am2.

In embodiments, the second magnet 52 is adjustable between a first and a second position along the longitudinal axis of the elongate body 51.

In embodiments, the second magnet 52 is configured to be detectable by a plurality of magnetometers M that together generate a sensing volume S proximate to an electronic interactive display 10, in use.

In embodiments, a magnetic axis of the second magnet 52 is substantially aligned with a longitudinal axis L of the second magnet 54.

In embodiments, the second magnet 52 does not change an appearance of a magnetically actuatable material, for example an electromagnetophoretic material, from a first visual state into a second visual state based on a magnetic stimulus, in use.

In embodiments, the second magnet 52 has a magnetic moment in one of the following ranges: less than 0.1 Am2, or between0.1 - 0.3 Am2, 0.3 - 0.6 Am2, 0.6 - 0.9 Am2, 0.9 - 1.2 Am2, 1.2 - 1.5 Am2, 1.5 - 1.8 Am2, 1.8 - 2.1 Am2, 2.1 - 2.4 Am2, 2.4 - 2.7 Am2, 2.7 - 3.0 Am2, 3.0 - 3.3 Am2, 3.3 - 3.6 Am2, 3.6 - 3.9 Am2, 3.9 - 4.2 Am2, 4.2 - 4.5 Am2, 4.5 - 4.8 Am2, 4.8 - 5.1 Am2, 5.1 - 5.4 Am2, 5.4 - 5.7 Am2, 5.7 - 6.0 Am2, 6.0 - 6.3 Am2, 6.3 - 6.6 Am2, 6.6 - 6.9 Am2, 6.9 - 7.2 Am2, 7.2 - 7.5 Am2, 7.5 - 7.8 Am2, 7.8 - 8.1 Am2, 8.1 - 8.4 Am2, 8.4 - 8.7 Am2, 8.7 - 9.0 Am2, 9.0 - 9.3 Am2, 9.3 - 9.6 Am2, 9.6 - 9.9 Am2.

In embodiments, a magnetic axis of the first magnet 54 is substantially aligned with a magnetic axis of the second magnet 52.

In embodiments, a polar orientation of the first magnet 54 along the longitudinal axis of the user borne device is substantially opposite to the polar orientation of the second magnet 52 along the longitudinal axis of the user borne device.

In embodiments, a polar orientation of the first magnet 54 along the longitudinal axis of the user borne device is substantially aligned along, or parallel to, the polar orientation of the second magnet 52 along the longitudinal axis of the user borne device.

In embodiments, the user borne device further comprises a third magnet 56 disposed at the distal end of the elongate body 51. The third magnet 56 can be used, for example, for erasing an interactive display of an electronic interactive device 10. A plurality of magnetometers M of an electronic interactive device 10 according to the first aspect, for example, is capable of detecting a different polarity of the third magnet 56 so that the electronic interactive device 10 can also build up a map of erased areas of the interactive display layer 20B.

According to an embodiment, a model of the rendering effect of the first and/or second magnets can be measured, and loaded into nonvolatile memory 25 of an associated electronic interactive device 10.

In embodiments, the third magnet 56 has the opposite polarity to the first magnet 54.

In embodiments, wherein the third magnet 56 is a striped pole magnet having a polar orientation that is aligned along a plane that is substantially perpendicular to the longitudinal axis.

In embodiments, one, or more, of the first 54, second 52, and/or third magnets 56 are permanent magnets, comprising, for example, neodymium or ferrite.

In embodiments, the third magnet 56 has a smaller magnetic moment relative to the first magnet 54 and second magnet 52.

In embodiments, the second magnet 52 is a cylinder magnet or ring magnet.

In embodiments, one, or more, of the first 54, second 52, and/or third 56 magnets are electromagnets.
In embodiments, the user borne device further comprises a power supply and a drive circuit configured to drive at least one of the electromagnets.

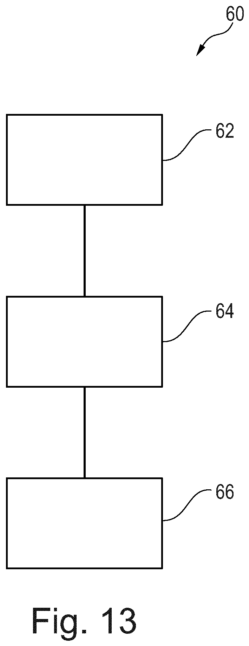

Fig. 13 schematically illustrates a computer implemented method 60 for operating an electronic interactive display.

According to a third aspect, there is provided a computer implemented method 60 for operating an electronic interactive display 10 comprising:
- performing 62 magnetic field measurements of a user borne device 50 within a sensing volume S proximate to an interactive display layer 20B of the electronic interactive display 10 using a plurality of magnetometers M defining a reference coordinate system of the electronic interactive display 10, wherein each magnetometer M of the plurality of magnetometers M has a rigid spatial relationship to the electronic interactive display;
- providing 64 the magnetic field measurement data to processing circuitry 16 based on the magnetic field measurements; and
- determining 64 the location, relative to the interactive display layer 20B, of a position and/or orientation of the user borne device 50 comprising at least one magnet when the at least one user borne device 50 is present in the sensing volume S.

In embodiments, the computer implemented method 60 is performed by the processing circuitry 16 of the electronic interactive device 10. For example, the computer implemented method 60 is represented as a computer program element and stored in the non-volatile memory of the electronic interactive device 10.

In embodiments, the method further comprises:
- detecting, using the position and/or orientation of the user borne device 50, that the at least one user borne device 50 has transformed a portion of the interactive display layer 20B from the first visual state to the second visual state; and
- generating screen representation data representing the position of the transformed portion of the interactive display layer 20B.

In an embodiment, the method further comprises outputting the screen representation data via the communication interface.

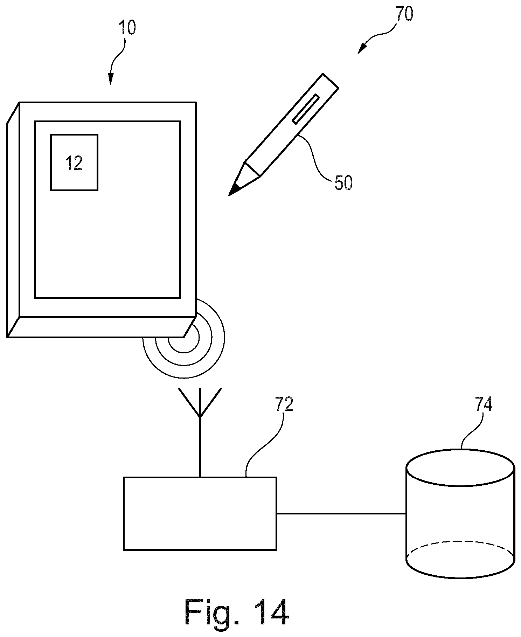

Fig. 14schematically illustrates a system comprising an electronic interactive display.

According to a fourth aspect, there is provided a system comprising an electronic interactive display 10 as defined by the first aspect or its embodiments, a user borne device 50 comprising at least one magnet as defined by the second aspect, and its embodiments, a host 74 and a communications network 72 configured to communicably couple the communications interface of the electronic interactive display 10 with the host. The electronic interactive display 10 is configured to communicate screen representation data to the host.

For example, the electronic interactive display 10 can receive screen representation data using the plurality of magnetometers M. The screen representation data can be transmitted via a communications network 72 to host 74. In examples, the host 74 is a Web server or cloud hosting service. A user of the electronic interactive display 10 may have an account on the Web server or cloud hosting service. Transmitting screen representation data obtained by the electronic interactive display 10 can facilitate backup of documents that have been written onto the electronic interactive display 10 for future display on the electronic interactive display 10. Furthermore, screen representation data stored in the host 74 can be shared with other project collaborators, for example.

According to a fifth aspect, there is provided a computer program element comprising machine readable instructions which, when performed by processing circuitry 16, are configured to perform the method according to the third aspect.

According to a sixth aspect, there is provided a kit of parts comprising an electronic interactive display 10 according to the first aspect, and a user borne device comprising at least one magnet according to the second aspect.

In the preceding specification, numerous specific details are set forth in order to provide a thorough understanding. It will be apparent, however, to one having ordinary skill in the art that the specific detail need not be employed to practice the present disclosure. In other instances, well-known materials or methods have not been described in detail in order to avoid obscuring the present disclosure.

Reference throughout the preceding specification to "one embodiment", "an embodiment", "one example" or "an example", "one aspect" or "an aspect" means that a particular feature, structure or characteristic described in connection with the embodiment or example is included in at least one embodiment of the present disclosure. Thus, appearances of the phrases "in one embodiment", "in an embodiment", "one example" or "an example", "one aspect" or "an aspect" in various places throughout this specification are not necessarily all referring to the same embodiment or example.

Furthermore, the particular features, structures, or characteristics may be combined in any suitable combinations and / or sub-combinations in one or more embodiments or examples. Where relevant, dimensions in millimetres in this application are cited to the nearest +- 0.01mm unless otherwise stated.

## Claims

1. An electronic interactive display (10) comprising:
- a substrate (12);
- a power source (14);
- an interactive display layer (20B) comprised on the substrate (12);
- a plurality of magnetometers (M) defining a reference coordinate system of the electronic interactive display (10), wherein each magnetometer (M1...) of the plurality of magnetometers (M) has a rigid spatial relationship to the other magnetometers (M); and
- processing circuitry (16) communicably coupled to at least the interactive display layer (20B) and the plurality of magnetometers (M);
wherein the interactive display layer (20B) comprises a magnetically actuatable material (19A, 19B);
wherein the interactive display layer (20B) faces a user (U) of the electronic interactive display (10), in use, and wherein a portion of the interactive display layer (20B) is configurable from least a first visual state into a second visual state based on a magnetic stimulus;
wherein the plurality of magnetometers (M) is configured to perform magnetic field measurements of a user borne device (50) comprising at least one magnet within a sensing volume (S) proximate to the interactive display layer (20B), and to provide magnetic field measurement data based on the magnetic field measurements to the processing circuitry (16); and
wherein the processing circuitry (16) is configured to receive the magnetic field measurement data, and to determine the position and/or orientation, relative to the interactive display layer (20B), of the user borne device (50) when the at least one user borne device (50) is present in the sensing volume (S),
wherein the processing circuitry (16) is configured to detect, using the magnetic field measurement data, that the user borne device (50) has been reoriented in the sensing volume (S) in the reference coordinate system, and
wherein the processing circuitry (16) is configured to change from a first operating mode to a second operating mode, or vice versa, when the processing circuitry (16) has detected that the user borne device (50) has been reoriented in the sensing volume.

2. The electronic interactive display (10) according to claim 1, wherein the processing circuitry (16) is further configured to:
detect, using the position and/or orientation of the user borne device (50), that the at least one user borne device (50) has transformed the portion of the interactive display layer (20B) from the first visual state to the second visual state; and
generating, using the processing circuitry (16), screen representation data comprising the position of the transformed portion of the interactive display layer (20B).

3. The electronic interactive display (10) according to one of the preceding claims,
wherein the interactive display layer (20B) further comprises one, or more, electrode arrays (20A, 20C), and the one, or more, electrode arrays (20A, 20C) are configured to apply an electric field to one, or more, spatial portions of the interactive display layer (20B).

4. The electronic interactive display (10) according to claim 3,
wherein the interactive display layer (20B) is configurable into third and fourth visual states, respectively, based on the polarity of the electric field applied by the one, or more, electrode arrays (20A, 20C).

5. The electronic interactive display (10) according to one of claims 3 or 4,
wherein the processing circuitry (16) is configured to drive the one, or more, electrode arrays (20A, 20C) to apply a priming electric field to at least a subset of the interactive display layer (20B) that corresponds to the determined location of the user borne device (50) obtained using the plurality of magnetometers (M).

6. The electronic interactive display (10) according to one of claims 3 to 5, when dependent on claim 2,
wherein driving and/or updating the one, or more, electrode arrays (20A, 20C) based on the screen representation data causes the processing circuitry (16) to transform the portion of the interactive display layer (20B) that has been previously transformed from the first visual state to the second visual state via magnetic actuation of the user borne device (50), into the third or fourth visual states by driving the one, or more, electrode arrays (20A, 20C) based on the screen representation data, and/or
wherein the third and fourth visual states have higher contrast than the first and second visual states.

7. The electronic interactive display (10) according to one of the preceding claims,
wherein the magnetically actuatable material is an electromagnetophoretic material.

8. The electronic interactive display (10) according to one of the preceding claims,
wherein the interactive display layer (20B) further comprises a capacitive touch sensing layer (20E) and/or a force sensing resistor layer (20F), and the processing circuitry (16) is further configured to localise a proximal end of the user borne device (50) or another object using the capacitive touch sensing layer (20E) and/or the force sensing resistor layer (20F).

9. The electronic interactive display (10) according to any one of the preceding claims,
wherein the first operating mode is a writing mode of the electronic interactive display (10), and the second operating mode is an erase mode of the electronic interactive display (10), and/or
wherein the electronic interactive display (10) does not receive a user command from either a button or menu function of the electronic interactive display (10) to cause the electronic interactive display to change between the first and second operating modes.

10. The electronic interactive display (10) according to one of claims 3 to 9,
wherein the processing circuitry (16) is configured to receive, via the communications interface, data for display on the interactive display layer (20B);
wherein the processing circuitry (16) is configured to display the data on the interactive display layer (20B) using the one, or more, electrode arrays (20A, 20C);
wherein the processing circuitry (16) is configured to detect an annotation or erasure made to the data displayed on the interactive display using the magnetic field measurement data of the user borne device (50); and
wherein the processing circuitry (16) is configured to store the annotation to the data, by one, or both, or modifying the data or appending metadata defining the annotation to the data.

11. A computer implemented method (60) for operating the electronic interactive display (10) according to any one of claims 1 to 10.

12. Use of a user borne device (50) with an electronic interactive display (10) according to any one of claims 1 to 10, wherein the user borne device comprises:
- an elongate body (51) defining a longitudinal axis (L) of the user borne device (50), wherein the elongate body (51) comprises a proximal end (P) and a distal end (D);
- a first magnet (54) disposed at, or near to, the proximal end of the elongate body (51); and
- a second magnet (52) disposed along at least a portion of the longitudinal axis of the user borne device in-between the first magnet (54) and the distal end (D) of the elongate body (51);
wherein the second magnet (52) has a magnetic moment that is at least twice as great as the magnetic moment of the first magnet (54).

13. A system (70) comprising:
- an electronic interactive display (10) as defined by one of claims 1 to 10;
- a user borne device (50) comprising at least one magnet (52, 54, 56);
- a host (74); and
- a communications network (72) configured to communicably couple the communications interface of the electronic interactive display (10) to the host (74);
wherein the electronic interactive display (10) is configured to communicate screen representation data written to the electronic interactive display (10) by the user borne device (50), to the host (74).

14. The system (70) according to claim 13, wherein the user borne device (50) comprises:
- an elongate body (51) defining a longitudinal axis (L) of the user borne device (50), wherein the elongate body (51) comprises a proximal end (P) and a distal end (D);
- wherein the at least one magnet comprises a first magnet (54) disposed at, or near to, the proximal end of the elongate body (51), and
- a second magnet (52) disposed along at least a portion of the longitudinal axis of the user borne device in-between the first magnet (54) and the distal end (D) of the elongate body (51);
wherein the second magnet (52) has a magnetic moment that is at least twice as great as the magnetic moment of the first magnet (54).

15. A computer program element comprising machine readable instructions which, when performed by processing circuitry (16), are configured to perform the computer implemented method according to claim 11.

## Patentansprüche

1. Elektronische interaktive Anzeige (10), umfassend:
- ein Substrat (12);
- eine Energiequelle (14);
- eine interaktive Anzeigeschicht (20B), die auf dem Substrat (12) besteht;
- eine Vielzahl von Magnetometern (M), die ein Referenzkoordinatensystem der elektronischen interaktiven Anzeige (10) definieren, wobei jedes Magnetometer (M1...) der Vielzahl von Magnetometern (M) eine starre räumliche Beziehung zu den anderen Magnetometern (M) aufweist; und
- eine Verarbeitungsschaltung (16), die mit mindestens der interaktiven Anzeigeschicht (20B) und der Vielzahl von Magnetometern (M) kommunikativ gekoppelt ist;
wobei die interaktive Anzeigeschicht (20B) ein magnetisch betätigbares Material (19A, 19B) umfasst;
wobei die interaktive Anzeigeschicht (20B) in Verwendung einem Benutzer (U) der elektronischen interaktiven Anzeige (10) zugewandt ist und wobei ein Abschnitt der interaktiven Anzeigeschicht (20B) basierend auf einem magnetischen Stimulus von mindestens einem ersten visuellen Zustand in einen zweiten visuellen Zustand konfigurierbar ist;
wobei die Vielzahl von Magnetometern (M) konfiguriert ist, um Magnetfeldmessungen einer benutzergetragenen Vorrichtung (50), umfassend mindestens einen Magneten, innerhalb eines Erfassungsvolumens (S) proximal zu der interaktiven Anzeigeschicht (20B) durchzuführen und um Magnetfeldmessdaten basierend auf den Magnetfeldmessungen an die Verarbeitungsschaltung (16) bereitzustellen; und
wobei die Verarbeitungsschaltung (16) konfiguriert ist, um die Magnetfeldmessdaten zu empfangen und um die Position und/oder Ausrichtung der benutzergetragenen Vorrichtung (50) relativ zu der interaktiven Anzeigeschicht (20B) zu bestimmen, wenn die mindestens eine benutzergetragene Vorrichtung (50) in dem Erfassungsvolumen (S) vorhanden ist,
wobei die Verarbeitungsschaltung (16) konfiguriert ist, um unter Verwendung der Magnetfeldmessdaten zu detektieren, dass die benutzergetragene Vorrichtung (50) in dem Erfassungsvolumen (S) in dem Referenzkoordinatensystem neu ausgerichtet wurde, und
wobei die Verarbeitungsschaltung (16) konfiguriert ist, um von einem ersten Betriebsmodus zu einem zweiten Betriebsmodus oder umgekehrt zu wechseln, wenn die Verarbeitungsschaltung (16) detektiert hat, dass die benutzergetragene Vorrichtung (50) in dem Erfassungsvolumen neu ausgerichtet wurde.

2. Elektronische interaktive Anzeige (10) nach Anspruch 1, wobei die Verarbeitungsschaltung (16) ferner konfiguriert ist zum:
Detektieren, unter Verwendung der Position und/oder Ausrichtung der benutzergetragenen Vorrichtung (50), dass die mindestens eine Benutzerheimvorrichtung (50) den Abschnitt der interaktiven Anzeigeschicht (20B) von dem ersten visuellen Zustand in den zweiten visuellen Zustand transformiert hat; und
Erzeugen, unter Verwendung der Verarbeitungsschaltung (16), von Bildschirmdarstellungsdaten, umfassend die Position des transformierten Abschnitts der interaktiven Anzeigeschicht (20B).

3. Elektronische interaktive Anzeige (10) nach einem der vorstehenden Ansprüche,
wobei die interaktive Anzeigeschicht (20B) ferner ein oder mehrere Elektrodenanordnungen (20A, 20C) umfasst, und die eine oder die mehreren Elektrodenanordnungen (20A, 20C) konfiguriert sind, um ein elektrisches Feld an einen oder mehrere räumliche Abschnitte der interaktiven Anzeigeschicht (20B) anzulegen.

4. Elektronische interaktive Anzeige (10) nach Anspruch 3,
wobei die interaktive Anzeigeschicht (20B) basierend auf der Polarität des elektrischen Felds, das durch die eine oder die mehreren Elektrodenanordnungen (20A, 20C) angelegt wird, in einen dritten beziehungsweise einen vierten visuellen Zustand konfigurierbar ist.

5. Elektronische interaktive Anzeige (10) nach einem der Ansprüche 3 oder 4,
wobei die Verarbeitungsschaltung (16) konfiguriert ist, um die eine oder die mehreren Elektrodenanordnungen (20A, 20C) anzusteuern, um ein elektrisches Zündfeld an mindestens eine Teilmenge der interaktiven Anzeigeschicht (20B) anzulegen, die dem bestimmten Ort der benutzergetragenen Vorrichtung (50), der unter Verwendung der Vielzahl von Magnetometern (M) erhalten wird, entspricht.

6. Elektronische interaktive Anzeige (10) nach einem der Ansprüche 3 bis 5, wenn abhängig von Anspruch 2,
wobei ein Ansteuern und/oder Aktualisieren der einen oder der mehreren Elektrodenanordnungen (20A, 20C) basierend auf den Bildschirmdarstellungsdaten bewirkt, dass die Verarbeitungsschaltung (16) den Abschnitt der interaktiven Anzeigeschicht (20B), der zuvor über magnetische Betätigung der benutzergetragenen Vorrichtung (50) von dem ersten visuellen Zustand in den zweiten visuellen Zustand transformiert wurde, durch Ansteuern der einen oder der mehreren Elektrodenanordnungen (20A, 20C) basierend auf den Bildschirmdarstellungsdaten in den dritten oder den vierten visuellen Zustand transformiert, und/oder
wobei der dritte und der vierte visuelle Zustand einen höheren Kontrast als der erste und der zweite visuelle Zustand aufweisen.

7. Elektronische interaktive Anzeige (10) nach einem der vorstehenden Ansprüche,
wobei das magnetisch betätigbare Material ein elektromagnetophoretisches Material ist.

8. Elektronische interaktive Anzeige (10) nach einem der vorstehenden Ansprüche,
wobei die interaktive Anzeigeschicht (20B) ferner eine kapazitive Berührungserfassungsschicht (20E) und/oder eine Krafterfassungswiderstandsschicht (20F) umfasst, und die Verarbeitungsschaltung (16) ferner konfiguriert ist, um ein proximales Ende der benutzergetragenen Vorrichtung (50) oder eines anderen Objekts unter Verwendung der kapazitiven Berührungserfassungsschicht (20E) und/oder der Krafterfassungswiderstandsschicht (20F) zu lokalisieren.

9. Elektronische interaktive Anzeige (10) nach einem beliebigen der vorstehenden Ansprüche,
wobei der erste Betriebsmodus ein Schreibmodus der elektronischen interaktiven Anzeige (10) ist und der zweite Betriebsmodus ein Löschmodus der elektronischen interaktiven Anzeige (10) ist, und/oder
wobei die elektronische interaktive Anzeige (10) keinen Benutzerbefehl von entweder einer Taste oder einer Menüfunktion der elektronischen interaktiven Anzeige (10) empfängt, um zu bewirken, dass die elektronische interaktive Anzeige zwischen dem ersten und dem zweiten Betriebsmodus wechselt.

10. Elektronische interaktive Anzeige (10) nach einem der Ansprüche 3 oder 9,
wobei die Verarbeitungsschaltung (16) konfiguriert ist, um Daten für die Anzeige auf der interaktiven Anzeigeschicht (20B) über die Kommunikationsschnittstelle zu empfangen;
wobei die Verarbeitungsschaltung (16) konfiguriert ist, um die Daten auf der interaktiven Anzeigeschicht (20B) unter Verwendung der einen oder der mehreren Elektrodenanordnungen (20A, 20C) anzuzeigen;
wobei die Verarbeitungsschaltung (16) konfiguriert ist, um eine Anmerkung oder Löschung, die an den Daten vorgenommen wird, die auf der interaktiven Anzeige angezeigt werden, unter Verwendung der Magnetfeldmessdaten der benutzergetragenen Vorrichtung (50) zu detektieren; und
wobei die Verarbeitungsschaltung (16) konfiguriert ist, um die Anmerkung zu den Daten durch eines oder beides von einem Modifizieren der Daten oder einem Anhängen von Metadaten, die die Anmerkung zu den Daten definieren, zu speichern.

11. Computerimplementiertes Verfahren (60) zum Betreiben der elektronischen interaktiven Anzeige (10) nach einem beliebigen der Ansprüche 1 bis 10.

12. Verwendung einer benutzergetragenen Vorrichtung (50) mit einer elektronischen interaktiven Anzeige (10) nach einem beliebigen der Ansprüche 1 bis 10, wobei die benutzergetragene Vorrichtung umfasst:
- einen länglichen Körper (51), der eine Längsachse (L) der benutzergetragenen Vorrichtung (50) definiert, wobei der längliche Körper (51) ein proximales Ende (P) und ein distales Ende (D) umfasst; - einen ersten Magneten (54), der an oder nahe dem proximalen Ende des länglichen Körpers (51) eingerichtet ist; und
- einen zweiten Magneten (52), der entlang mindestens eines Abschnitts der Längsachse der benutzergetragenen Vorrichtung zwischen dem ersten Magneten (54) und dem distalen Ende (D) des länglichen Körpers (51) eingerichtet ist;
wobei der zweite Magnet (52) ein magnetisches Moment aufweist, das mindestens doppelt so groß wie das magnetische Moment des ersten Magnets (54) ist.

13. System (70), umfassend:
- eine elektronische interaktive Anzeige (10), wie durch einen der Ansprüche 1 bis 10 definiert;
- eine benutzergetragene Vorrichtung (50), umfassend mindestens einen Magneten (52, 54, 56);
- einen Host (74); und
- ein Kommunikationsnetzwerk (72), das konfiguriert ist, um die Kommunikationsschnittstelle der elektronischen interaktiven Anzeige (10) mit dem Host (74) kommunikativ zu koppeln;
wobei die elektronische interaktive Anzeige (10) konfiguriert ist, um Bildschirmdarstellungsdaten, die durch die benutzergetragene Vorrichtung (50) auf die elektronische interaktive Anzeige (10) geschrieben werden, an den Host (74) zu kommunizieren.

14. System (70) nach Anspruch 13, wobei die benutzergetragene Vorrichtung (50) umfasst:
- einen länglichen Körper (51), der eine Längsachse (L) der benutzergetragenen Vorrichtung (50) definiert, wobei der längliche Körper (51) ein proximales Ende (P) und ein distales Ende (D) umfasst;
- wobei der mindestens eine Magnet einen ersten Magneten (54), der an oder nahe dem proximalen Ende des länglichen Körpers (51) eingerichtet ist, umfasst, und
- einen zweiten Magneten (52), der entlang mindestens eines Abschnitts der Längsachse der benutzergetragenen Vorrichtung zwischen dem ersten Magneten (54) und dem distalen Ende (D) des länglichen Körpers (51) eingerichtet ist;
wobei der zweite Magnet (52) ein magnetisches Moment aufweist, das mindestens doppelt so groß wie das magnetische Moment des ersten Magnets (54) ist.

15. Computerprogrammelement, umfassend maschinenlesbare Anweisungen, die, wenn sie durch die Verarbeitungsschaltung (16) durchgeführt werden, konfiguriert sind, um das computerimplementierte Verfahren nach Anspruch 11 durchzuführen.

## Revendications

1. Affichage interactif électronique (10) comprenant :
- un substrat (12) ;
- une source de puissance (14) ;
- une couche d'affichage interactif (20B) comprise sur le substrat (12) ;
- une pluralité de magnétomètres (M) définissant un système de coordonnées de référence de l'affichage interactif électronique (10), dans lequel chaque magnétomètre (M1...) de la pluralité de magnétomètres (M) a une relation spatiale rigide avec les autres magnétomètres (M) ; et
- un système de circuits de traitement (16) couplé par communication au moins à la couche d'affichage interactif (20B) et à la pluralité de magnétomètres (M) ;
dans lequel la couche d'affichage interactif (20B) comprend un matériau actionnable magnétiquement (19A, 19B) ;
dans lequel la couche d'affichage interactif (20B) fait face vers un utilisateur (U) de l'affichage interactif électronique (10), en cours d'utilisation, et dans lequel une partie de la couche d'affichage interactif (20B) est configurable d'au moins un premier état visuel à un deuxième état visuel en fonction d'une stimulation magnétique ;
dans lequel la pluralité de magnétomètres (M) est configurée pour mettre en œuvre des mesures de champ magnétique d'un dispositif porté par l'utilisateur (50) comprenant au moins un aimant au sein d'un volume de captage (S) à proximité de la couche d'affichage interactif (20B), et pour fournir des données de mesure de champ magnétique en fonction des mesures de champ magnétique au système de circuits de traitement (16) ; et
dans lequel le système de circuits de traitement (16) est configuré pour recevoir les données de mesure de champ magnétique, et pour déterminer la position et/ou l'orientation, par rapport à la couche d'affichage interactif (20B), du dispositif porté par l'utilisateur (50) lorsque l'au moins un dispositif porté par l'utilisateur (50) est présent dans le volume de captage (S),
dans lequel le système de circuits de traitement (16) est configuré pour détecter, à l'aide des données de mesure de champ magnétique, que le dispositif porté par l'utilisateur (50) a été réorienté dans le volume de captage (S) dans le système de coordonnées de référence, et
dans lequel le système de circuits de traitement (16) est configuré pour changer d'un premier mode de fonctionnement à un second mode de fonctionnement, ou inversement, lorsque le système de circuits de traitement (16) a détecté que le dispositif porté par l'utilisateur (50) a été réorienté dans le volume de captage.

2. Affichage interactif électronique (10) selon la revendication 1, dans lequel le système de circuits de traitement (16) est configuré en outre pour :
détecter, à l'aide de la position et/ou de l'orientation du dispositif porté par l'utilisateur (50), que l'au moins un dispositif porté par l'utilisateur (50) a transformé la partie de la couche d'affichage interactif (20B) du premier état visuel au deuxième état visuel ; et
la génération, à l'aide du système de circuits de traitement (16), de données de représentation d'écran comprenant la position de la partie transformée de la couche d'affichage interactif (20B).

3. Affichage interactif électronique (10) selon l'une des revendications précédentes,
dans lequel la couche d'affichage interactif (20B) comprend en outre un, ou plusieurs, réseaux d'électrodes (20A, 20C), et le, ou les, réseaux d'électrodes (20A, 20C) sont configurés pour appliquer un champ électrique à une, ou plusieurs, parties spatiales de la couche d'affichage interactif (20B).

4. Affichage interactif électronique (10) selon la revendication 3,
dans lequel la couche d'affichage interactif (20B) est configurable dans des troisième et quatrième états visuels, respectivement, en fonction de la polarité du champ électrique appliqué par le, ou les, réseaux d'électrodes (20A, 20C).

5. Affichage interactif électronique (10) selon l'une des revendications 3 ou 4,
dans lequel le système de circuits de traitement (16) est configuré pour piloter le, ou les, réseaux d'électrodes (20A, 20C) pour appliquer un champ électrique d'amorçage à au moins un sous-ensemble de la couche d'affichage interactif (20B) qui correspond à la localisation déterminée du dispositif porté par l'utilisateur (50) obtenue à l'aide de la pluralité de magnétomètres (M).

6. Affichage interactif électronique (10) selon l'une des revendications 3 à 5, prise en dépendance de la revendication 2,
dans lequel le pilotage et/ou la mise à jour du, ou des, réseaux d'électrodes (20A, 20C) en fonction des données de représentation d'écran amène le système de circuits de traitement (16) à transformer la partie de la couche d'affichage interactif (20B) qui a été précédemment transformée du premier état visuel au deuxième état visuel par l'intermédiaire d'un actionnement magnétique du dispositif porté par l'utilisateur (50), en les troisième ou quatrième états visuels en pilotant le, ou les, réseaux d'électrodes (20A, 20C) en fonction des données de représentation d'écran, et/ou
dans lequel les troisième et quatrième états visuels ont un contraste plus élevé que les premier et deuxième états visuels.

7. Affichage interactif électronique (10) selon l'une des revendications précédentes,
dans lequel le matériau actionnable magnétiquement est un matériau électromagnétophorétique.

8. Affichage interactif électronique (10) selon l'une des revendications précédentes,
dans lequel la couche d'affichage interactif (20B) comprend en outre une couche de captage tactile capacitif (20E) et/ou une couche de résistance de captage de force (20F), et le système de circuits de traitement (16) est configuré en outre pour localiser une extrémité proximale du dispositif porté par l'utilisateur (50) ou d'un autre objet à l'aide de la couche de captage tactile capacitif (20E) et/ou de la couche de résistance de captage de force (20F).

9. Affichage interactif électronique (10) selon l'une quelconque des revendications précédentes,
dans lequel le premier mode de fonctionnement est un mode d'écriture de l'affichage interactif électronique (10), et le second mode de fonctionnement est un mode d'effacement de l'affichage interactif électronique (10), et/ou
dans lequel l'affichage interactif électronique (10) ne reçoit pas d'instruction d'utilisateur en provenance soit d'un bouton soit d'une fonction de menu de l'affichage interactif électronique (10) pour amener l'affichage interactif électronique à changer entre les premier et second modes de fonctionnement.

10. Affichage interactif électronique (10) selon l'une des revendications 3 à 9,
dans lequel le système de circuits de traitement (16) est configuré pour recevoir, par l'intermédiaire de l'interface de communication, des données pour affichage sur la couche d'affichage interactif (20B) ;
dans lequel le système de circuits de traitement (16) est configuré pour afficher les données sur la couche d'affichage interactif (20B) à l'aide du, ou des, réseaux d'électrodes (20A, 20C) ;
dans lequel le système de circuits de traitement (16) est configuré pour détecter une annotation ou un effacement apporté aux données affichées sur l'affichage interactif à l'aide des données de mesure de champ magnétique du dispositif porté par l'utilisateur (50) ; et
dans lequel le système de circuits de traitement (16) est configuré pour stocker l'annotation dans les données, par l'une, ou par l'une et l'autre, parmi la modification des données ou l'adjonction de métadonnées définissant l'annotation dans les données.

11. Procédé implémenté par ordinateur (60) permettant de faire fonctionner l'affichage interactif électronique (10) selon l'une quelconque des revendications 1 à 10.

12. Utilisation d'un dispositif porté par l'utilisateur (50) avec un affichage interactif électronique (10) selon l'une quelconque des revendications 1 à 10, dans lequel le dispositif porté par l'utilisateur comprend :
- un corps allongé (51) définissant un axe longitudinal (L) du dispositif porté par l'utilisateur (50), dans lequel le corps allongé (51) comprend une extrémité proximale (P) et une extrémité distale (D) ;
- un premier aimant (54) disposé au niveau, ou près, de l'extrémité proximale du corps allongé (51) ; et
- un second aimant (52) disposé le long d'au moins une partie de l'axe longitudinal du dispositif porté par l'utilisateur entre le premier aimant (54) et l'extrémité distale (D) du corps allongé (51) ;
dans lequel le second aimant (52) a un moment magnétique qui est au moins deux fois plus grand que le moment magnétique du premier aimant (54).

13. Système (70) comprenant :
- un affichage interactif électronique (10) tel que défini par l'une des revendications 1 à 10 ;
- un dispositif porté par l'utilisateur (50) comprenant au moins un aimant (52, 54, 56) ;
- un hôte (74) ; et
- un réseau de communications (72) configuré pour coupler par communication l'interface de communications de l'affichage interactif électronique (10) à l'hôte (74) ;
dans lequel l'affichage interactif électronique (10) est configuré pour communiquer des données de représentation d'écran écrites sur l'affichage interactif électronique (10) par le dispositif porté par l'utilisateur (50), à l'hôte (74).

14. Système (70) selon la revendication 13, dans lequel le dispositif porté par l'utilisateur (50) comprend :
- un corps allongé (51) définissant un axe longitudinal (L) du dispositif porté par l'utilisateur (50), dans lequel le corps allongé (51) comprend une extrémité proximale (P) et une extrémité distale (D) ;
- dans lequel l'au moins un aimant comprend un premier aimant (54) disposé au niveau, ou près, de l'extrémité proximale du corps allongé (51), et
- un second aimant (52) disposé le long d'au moins une partie de l'axe longitudinal du dispositif porté par l'utilisateur entre le premier aimant (54) et l'extrémité distale (D) du corps allongé (51) ;
dans lequel le second aimant (52) a un moment magnétique qui est au moins deux fois plus grand que le moment magnétique du premier aimant (54).

15. Élément de programme d'ordinateur comprenant des instructions lisibles par machine qui, lorsqu'elles sont mises en œuvre par un système de circuits de traitement (16), sont configurées pour mettre en œuvre le procédé implémenté par ordinateur selon la revendication 11.
